# EUROPEAN PATENT APPLICATION

(11) **EP 4 498 669 A1**
(43) Date of publication of application: **29.01.2025**
(21) Application number: 24186143.4
(22) Date of filing: 03.07.2024
(51) Int. Cl.: H04N 1/60

(54) **COLOR ADJUSTMENT SYSTEM, COLOR ADJUSTMENT METHOD, PRINTED MATTER, AND CARRIER MEDIUM**

(30) Priority: 28.07.2023 JP 2023123607
(71) Applicant: Ricoh Company, Ltd., Tokyo 143-8555 (JP)
(72) Inventor: Matsushima, Hiroyuki, Tokyo, 143-8555 (JP)
(74) Representative: Marks & Clerk LLP

(57) **Abstract**

A color adjustment system (1, 1a) includes a first registration unit (301) to register in a storage unit job data for instructing printing of an image based on a document file, a second registration unit (304) to register color sample data in the storage unit in association with the job data, a print management unit (305) to cause a printing apparatus to print, using an input profile corresponding to the job data, the image based on the document file indicated by the job data to output a first printed matter including an identification code for identifying the job data, a first acquisition unit (306) to acquire first read image data obtained by a reading apparatus reading the first printed matter, an analysis unit (307) to analyze the identification code included in the first read image data to specify a particular job data the first printed matter corresponds to, and a generation unit (308) to newly generate another input profile corresponding to the particular job data based on the color sample data, the input profile, and the document file corresponding to the particular job data indicated by the identification code analyzed by the analysis unit (307).

## Description

### BACKGROUND

### Technical Field

The present disclosure relates to a color adjustment system, a color adjustment method, a printed matter, and a carrier medium.

### Related Art

In the field of commercial printing (production printing), color adjustment for printers (primarily electrophotographic printers and inkjet printers) is performed using color sample matching. The color sample matching refers to the processing of generating an input profile, for a printing machine, using color sample data serving as a sample representing an ideal color and a read image obtained by reading a printed matter printed before execution of the color sample matching. The input profile allows the printing machine to reproduce the color of a printed matter closer to the color represented by the color sample data.

As such a color adjustment technique, Japanese Patent No. 5733083 discloses a technique of creating a color tone conversion parameter using reference image data obtained by an image reading apparatus reading a reference printed matter.

However, in the above-described technique, since a process of printing out a printed matter representing image data of a document and a process of causing a reading apparatus to read the printed matter need to be performed as a series of processes for one piece of job data, there is a disadvantage that the printing process and the reading process cannot be performed independently by different operators.

### SUMMARY

In one aspect, a color adjustment system includes a first registration unit to register in a storage unit job data for instructing printing of an image based on a document file, a second registration unit to register color sample data in the storage unit in association with the job data, a print management unit to cause a printing apparatus to print, using an input profile corresponding to the job data, the image based on the document file indicated by the job data to output a first printed matter including an identification code for identifying the job data, a first acquisition unit to acquire first read image data obtained by a reading apparatus reading the first printed matter, an analysis unit to analyze the identification code included in the first read image data to specify a particular job data the first printed matter corresponds to, and a generation unit to newly generate another input profile corresponding to the particular job data based on the color sample data, the input profile, and the document file corresponding to the particular job data indicated by the identification code analyzed by the analysis unit.

In another aspect, a color adjustment method includes registering in a storage unit job data for instructing printing of an image based on a document file, registering color sample data in the storage unit in association with the job data, causing a printing apparatus to print, using an input profile corresponding to the job data, the image based on the document file indicated by the job data to output a first printed matter including an identification code for identifying the job data, acquiring first read image data obtained by a reading apparatus reading the first printed matter, analyzing the identification code included in the first read image data to specify a particular job data the first printed matter corresponds to, and newly generating another input profile corresponding to the particular job data based on the color sample data, the input profile, and the document file corresponding to the particular job data indicated by the identification code analyzed by the analysis unit.

In another aspect, a printed matter includes an identification code for identifying job data for instructing printing of an image based on a document file and a control code for identifying a type of a printed matter subjected to reading by a reading apparatus.

In another aspect, a carrier medium carries computer readable code for controlling a computer system to carry out a method including registering in a storage unit job data for instructing printing of an image based on a document file, registering color sample data in the storage unit in association with the job data, causing a printing apparatus to print, using an input profile corresponding to the job data, the image based on the document file indicated by the job data to output a first printed matter including an identification code for identifying the job data, acquiring first read image data obtained by a reading apparatus reading the first printed matter, analyzing the identification code included in the first read image data to specify a particular job data the first printed matter corresponds to, and newly generating another input profile corresponding to the particular job data based on the color sample data, the input profile, and the document file corresponding to the particular job data indicated by the identification code analyzed by the analysis unit.

According to the present disclosure, the printing process and the reading process for color matching can be performed independently.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating an overall configuration of a color adjustment system according to an embodiment of the present disclosure;
FIG. 2 is a block diagram illustrating a hardware configuration of a printing machine according to the embodiment of the present disclosure;
FIG. 3 is a block diagram illustrating a hardware configuration of a control server according to the embodiment of the present disclosure;
FIG. 4 is a block diagram illustrating a hardware configuration of an image reading apparatus according to the embodiment of the present disclosure;
FIG. 5 is a block diagram illustrating a hardware configuration of an information terminal according to the embodiment of the present disclosure;
FIG. 6 is a block diagram illustrating a functional configuration of a color adjustment system according to the embodiment of the present disclosure;
FIGS. 7A to 7C are diagrams each illustrating a print sample and a sample code printed matter, according to the embodiment of the present disclosure;
FIGS. 8A to 8C are diagrams each illustrating a printed matter used for color matching and a printed matter of a code used for color matching, according to the embodiment of the present disclosure;
FIG. 9 is a diagram illustrating another printed matter used for color matching, according to the embodiment of the present disclosure;
FIG. 10 (FIGS. 10A and 10B) is a diagram illustrating a flow of the data processing executed by a color adjustment system when a print sample is used, according to the embodiment of the present disclosure;
FIG. 11 (FIGS. 11A and 11B) is a diagram illustrating a flow of the data processing executed by a color adjustment system when a color conversion rule is designated, according to the embodiment of the present disclosure;
FIG. 12 is a diagram illustrating the data structure of data handled by a color adjustment system according to the embodiment of the present disclosure;
FIG. 13 (FIGS. 13A and 13B) is a sequence chart illustrating the processing to register a job and a color sample executed by a color adjustment system according to the embodiment of the present disclosure;
FIG. 14 is a diagram illustrating a job list screen according to the embodiment of the present disclosure;
FIG. 15 is a diagram illustrating a job registration screen according to the embodiment of the present disclosure;
FIG. 16 is a diagram illustrating a digital color proof (DCP) creation method selection screen according to the embodiment of the present disclosure;
FIG. 17 is a diagram illustrating a DCP setting screen according to the embodiment of the present disclosure;
FIG. 18 is a diagram illustrating a color conversion rule designation screen according to the embodiment of the present disclosure;
FIG. 19 is a diagram illustrating a job registration completion screen according to the embodiment of the present disclosure;
FIG. 20 (FIGS. 20A, 20B, and 20C) is a sequence chart illustrating the color adjustment processing executed by a color adjustment system according to the embodiment of the present disclosure;
FIG. 21 is a diagram illustrating a job selection screen according to the embodiment of the present disclosure;
FIG. 22 is a diagram illustrating a job detail screen according to the embodiment of the present disclosure;
FIG. 23 is a diagram illustrating a printer setting screen according to the embodiment of the present disclosure;
FIG. 24 is a diagram illustrating a color matching determination detail screen in a state, according to the embodiment of the present disclosure;
FIG. 25 is a diagram illustrating the color matching determination detail screen of FIG. 24 in another state different from the state illustrated in FIG. 24, according to the embodiment of the present disclosure;
FIG. 26 is a diagram illustrating a print report according to the embodiment of the present disclosure;
FIG. 27 (FIGS. 27A and 27B) is a block diagram illustrating a functional configuration of a color adjustment system according to a modification of the embodiment of the present disclosure;
FIG. 28 is a diagram illustrating a job selection screen according to a modification of the embodiment of the present disclosure;
FIG. 29 is a diagram illustrating a job transfer screen according to a modification of the embodiment of the present disclosure;
FIG. 30 is a diagram illustrating a job allocation screen according to a modification of the embodiment of the present disclosure;
FIG. 31 is a diagram illustrating a job duplication screen according to a modification of the embodiment of the present disclosure; and
FIG. 32 is a diagram illustrating a job transfer screen transitioned from a job duplication screen, according to a modification of the embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of a color adjustment system, a color adjustment method, a printed matter, and a carrier medium according to the present disclosure are described in detail below with reference to the drawings. The present disclosure, however, is not limited to the following one or more embodiments, and the constituent elements of the following one or more embodiments include elements that may be easily conceived by those skilled in the art, those being substantially the same ones, and those being within equivalent ranges. Furthermore, various omissions, substitutions, changes, and combinations of the constituent elements may be made without departing from the gist of the following one or more embodiments.

### Overall Configuration of Color Adjustment System

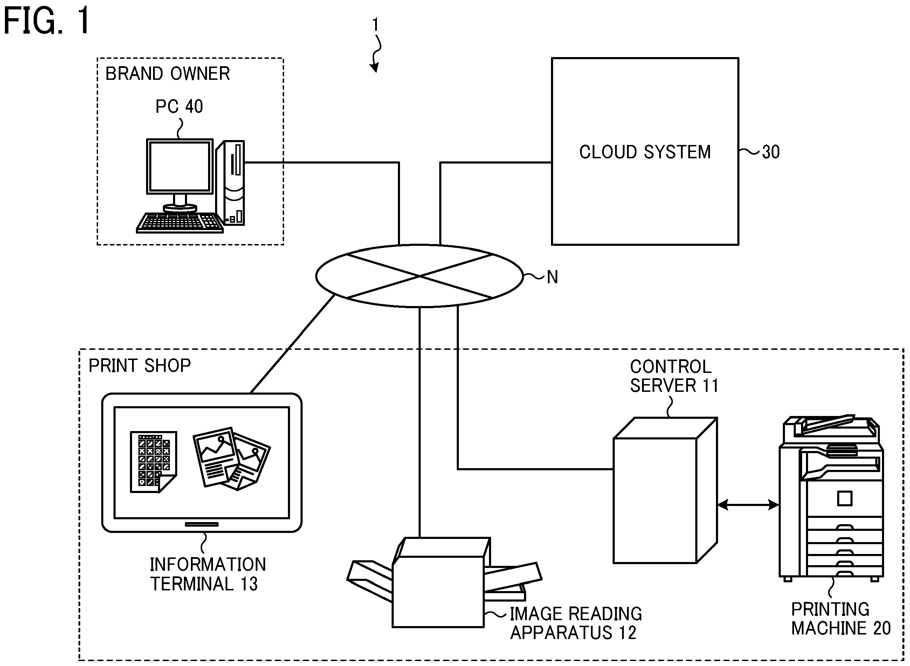

FIG. 1 is a schematic diagram illustrating an overall configuration of a color adjustment system according to the present embodiment. The overall configuration of a color adjustment system 1 according to the present embodiment is described below with reference to FIG. 1.

The color adjustment system 1 illustrated in FIG. 1 is an information processing system that performs color adjustment for the printing executed by a printing machine, using a digital color proof (DCP) based on a print sample. The DCP is color sample data created based on a read image (read image data) obtained by reading a print sample that is a printed matter serving as a color sample representing an ideal color. The print sample is, for example, a printed matter obtained by an ideal printing machine printing texts or images based on a document file indicated by job data in advance. The ideal printing machine is, for example, a printer or offset printing machine that has already been adjusted to an appropriate state. As illustrated in FIG. 1, the color adjustment system 1 includes a control server 11, an image reading apparatus 12, an information terminal 13, a printing machine 20, a cloud system 30, and a personal computer (PC) 40. In the configuration of the color adjustment system 1 illustrated in FIG. 1, the control server 11, the image reading apparatus 12, the information terminal 13, the cloud system 30, and the PC 40 are communicable with each other via a network N such as the Internet.

In the present embodiment, the image reading apparatus 12 is held by a print shop holding the printing machine 20, but not limited thereto. In another embodiment, the image reading apparatus 12 may be held by a print management company or a proofreading site that acts as an intermediary between the print shop and a brand owner who orders printing. In still another embodiment, the image reading apparatus 12 may be held by the brand owner or another print shop different from the print shop illustrated in FIG. 1. The brand owner is, for example, a client or order requester who orders, for example, a printing company to produce a commercial product such as production of a printed matter. On the other hand, the printing company (print shop, print office) is a product supplier that has one or more print shops where one or more printing machines are installed, and prints and delivers a printed matter as a commercial product ordered by the client. The product supplier may receive the order directly from the client, or may receive the order indirectly through a print quality control company or an intermediary company such as a print management company or a proofreading company. The printed matter primarily refers to a commercial printed matter used for, for example, business or sales promotion by the brand owner who is the client. Examples of the commercial printed matter include an advertisement, a flyer, a booklet, a poster, a direct mail, a sales promotion material, a catalog, a pamphlet, a slip, and an invoice, and may also include any printed matter of a document. The present disclosure may be applied to any order and delivery process of production of not only printed matters but also various commercial products, merchandise, and promotional materials.

The control server 11 is a server apparatus that controls the printing machine 20 to execute the printing process. The control server 11 may be, in addition to being a dedicated server apparatus, implemented by a communication terminal such as a PC held by the printing company or the print shop, on which dedicated software is installed.

The image reading apparatus 12 is a reading apparatus that executes the reading process on a print sample and various kinds of printed matters. As the reading process, the image reading apparatus 12 performs colorimetry on the print sample or a printed matter to obtain a read image formed of device-independent color values such as L*a*b* values of the L*a*b* colorimetric system (simply referred to as "Lab values" in the following description). Examples of the image reading apparatus 12 include, but are not limited to, apparatuses such as an image scanner and a colorimeter, and include any other apparatus having a function of acquiring a read image (read image data) of the print sample or the printed matter.

The printing machine 20 is a printing apparatus such as a multifunction peripheral (MFP) that executes the printing process according to job data under the control performed by the control server 11. Specifically, the printing machine 20 converts the contents of a document file indicated by the job data into device-independent color values (such as Lab values) using an input profile, converts the device-independent color values into cyan, magenta, yellow, and black (CMYK) data using an output profile for the purpose of printing out the contents of the document file in the color values, and executes the printing process. As will be described later, the input profile is generated by a color matching unit 308 of the cloud system 30 so that the input profile allows the printing machine 20 to reproduce the color of a printed matter closer to the color represented by the DCP. On the other hand, the output profile is determined according to the printing characteristics of the printing machine 20, and thus the output profile is assumed to be fixed. The printing machine 20 is not limited to the MFP, and may be any of printing apparatuses employing various printing methods, such as an ordinary electrophotographic printing apparatus or inkjet printing apparatus having a printing function as one of the primary functions, or a commercial printing apparatus controlled by a digital front end (DFE).

The information terminal 13 is an information terminal such as a tablet terminal or a PC owned by a printing operator of the print shop, and selects one of the pieces of job data registered in the cloud system 30, subject to the printing process to be executed.

The cloud system 30 is a system in a cloud service for creating a DCP based on, for example, the read image of the print sample, registering the DCP, and executing color matching.

The PC 40 is an information processing apparatus owned by the brand owner, and registers job data that is a subject of a print request. In the present embodiment, the job data is data for requesting, for example, the printing company to print an image based on a document file with predetermined settings.

### Hardware Configuration of Printing Machine

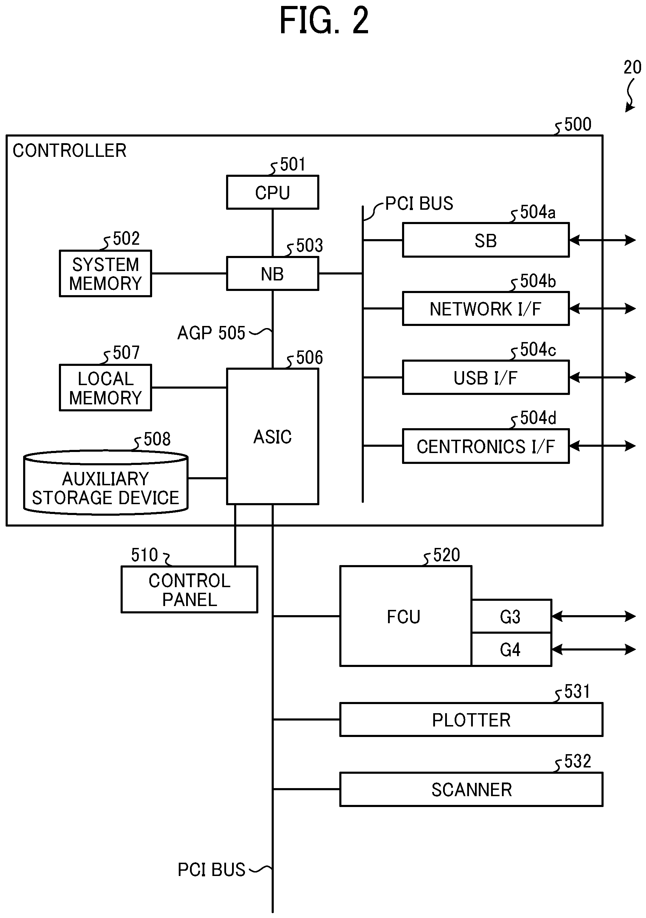

FIG. 2 is a block diagram illustrating a hardware configuration of a printing machine according to the present embodiment. The hardware configuration of the printing machine 20 according to the present embodiment is described below with reference to FIG. 2.

As illustrated in FIG. 2, the printing machine 20 according to the present embodiment includes a controller 500, a control panel 510, a facsimile control unit (FCU) 520, a plotter 531 (printing device), and a scanner 532, which are connected to each other by a peripheral component interconnect (PCI) bus.

The controller 500 is a device that controls the entire operation, drawing, and communication performed by the printing machine 20 and controls input through the control panel 510.

The control panel 510 is, for example, a touch panel. The control panel 510 is a device that receives an input to the controller 500 (input function) and displays the state of the printing machine 20 (display function). The control panel 510 is directly connected to an application-specific integrated circuit (ASIC) 506 to be described later.

The FCU 520 is a device that provides a facsimile communication function, and is connected to the ASIC 506 via, for example, the PCI bus.

The plotter 531 is a device that provides a printing function, and is connected to the ASIC 506 via, for example, the PCI bus. The scanner 532 is a device that provides a scanning function, and is connected to the ASIC 506 via, for example, the PCI bus.

The controller 500 includes a central processing unit (CPU) 501, a system memory 502, a north bridge (NB) 503, a south bridge (SB) 504a, a network interface (I/F) 504b, a universal serial bus (USB) I/F 504c, a Centronics I/F 504d, the ASIC 506, a local memory 507, and an auxiliary storage device 508.

The CPU 501 controls the entire operation of the printing machine 20. The CPU 501 is connected to a chipset including the system memory 502, the NB 503, and the SB 504a, and is connected to other devices via the chipset.

The system memory 502 is a memory for storing programs and data, loading programs and data, and storing drawing data for a printer. The system memory 502 includes a read-only memory (ROM) and a random-access memory (RAM). The ROM is a read-only memory for storing programs and data. The RAM is a writable and readable memory for loading programs and data, and storing drawing data for the printer.

The NB 503 is a bridge for connecting the CPU 501 to the system memory 502, the SB 504a, and an accelerated graphics port (AGP) bus 505. The NB 503 includes a memory controller that controls the reading and writing from and to the system memory 502, a PCI master, and an AGP target.

The SB 504a is a bridge for connecting the NB 503 to PCI devices and peripheral devices. The SB 504a is connected to the NB 503 via the PCI bus. To the PCI bus, the network I/F 504b, the USB I/F 504c, and the Centronics I/F 504d are connected.

The network I/F 504b, which may be implemented by an interface circuit, is an interface for communicating data with external apparatuses such as the control server 11 and the cloud system 30 using networks. The network I/F 504b supports, for example, ETHERNET and can make communication conforming to, for example, transmission control protocol (TCP)/Internet protocol (IP).

The USB I/F 504c, which may be implemented by an interface circuit, is an interface that can communicate with devices conforming to the USB standard.

The Centronics I/F 504d, which may be implemented by an interface circuit, is an interface having a specification of a parallel port that can transmit a plurality of bits.

The AGP bus 505 is a bus interface for a graphics accelerator card, which has been proposed to accelerate graphics processing. The AGP bus 505 directly accesses the system memory 502 with high throughput to accelerate the graphics accelerator card.

The ASIC 506 is an integrated circuit (IC) dedicated to image processing and includes hardware elements for image processing. The ASIC 506 serves as a bridge to connect the AGP bus 505, the PCI bus, the auxiliary storage device 508, and the local memory 507 to each other. The ASIC 506 includes a PCI target, an AGP master, an arbiter (ARB) as a central processor of the ASIC 506, a memory controller to control the local memory 507, a plurality of direct memory access controllers (DMACs), and a PCI unit. For example, the DMACs convert coordinates of image data with hardware logic to rotate an image based on the image data. The PCI unit transfers data between the plotter 531 and the scanner 532 through the PCI bus. To the ASIC 506, for example, the FCU 520, the plotter 531, and the scanner 532 are connected via the PCI bus. To the ASIC 506, for example, a host PC and a network are also connected.

The local memory 507 is a memory used as a buffer for image data to be copied or a code buffer.

The auxiliary storage device 508 is a storage device such as a hard disk drive (HDD), a solid-state drive (SSD), a secure digital (SD) card, or a flash memory, and stores, for example, input profiles, output profiles, image data, programs, font data, and forms.

Any computer program executed by the printing machine 20 described above may be provided, in a file format installable to or executable by a computer, as a computer program product stored in a computer-readable recording medium (for example, the auxiliary storage device 508).

The hardware configuration of the printing machine 20 illustrated in FIG. 2 is given by way of example. The printing machine 20 does not necessarily include all the components illustrated in FIG. 2, or may include some other components.

### Hardware Configuration of Control Server

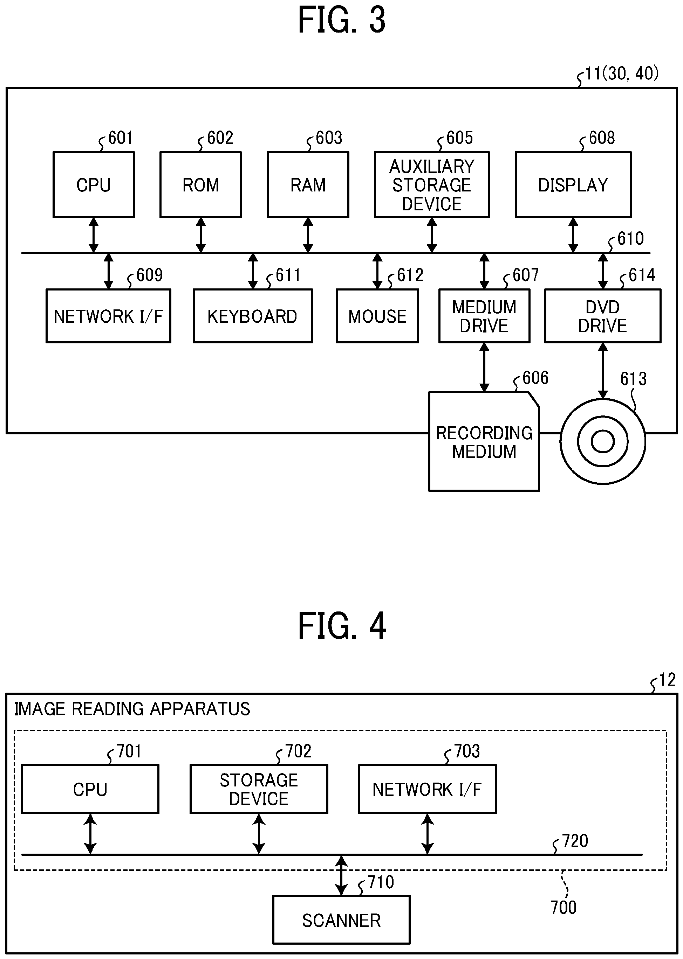

FIG. 3 is a block diagram illustrating a hardware configuration of a control server according to the present embodiment. The hardware configuration of the control server 11 according to the present embodiment is described below with reference to FIG. 3.

As illustrated in FIG. 3, the control server 11 includes a CPU 601, a ROM 602, a RAM 603, an auxiliary storage device 605, a medium drive 607, a display 608, a network I/F 609, a keyboard 611, a mouse 612, and a digital versatile disc (DVD) drive 614.

The CPU 601 is a processor that controls the entire operation of the control server 11. The ROM 602 is a non-volatile storage device that stores programs to be executed by the control server 11. The RAM 603 is a volatile storage device used as a work area for the CPU 601.

The auxiliary storage device 605 is a storage device such as an HDD or an SSD that stores input profiles used for the printing machine 20, various data, and programs. The medium drive 607 is a device that controls the reading and writing of data to and from a recording medium 606 such as a flash memory under the control of the CPU 601.

The display 608 is a display device that includes, for example, a liquid crystal display or an organic electro-luminescence (EL) display on which various kinds of information such as a cursor, a menu, a window, characters, and images are displayed.

The network I/F 609, which may be implemented by an interface circuit, is an interface for communicating data with external apparatuses such as the printing machine 20 and the cloud system 30 using networks. The network I/F 609 is, for example, a network interface card (NIC) that supports ETHERNET, and can make communication conforming to, for example, TCP/IP.

The keyboard 611 is an input device used for selecting characters, numbers, or various instructions, and for moving a cursor, for example. The mouse 612 is an input device used for selecting and executing various instructions, selecting an object subjected to processing, and moving a cursor, for example.

The DVD drive 614 is a device that controls the reading and writing of various data from and to a DVD 613 that serves as a removable storage medium such as a digital versatile disc read-only memory (DVD-ROM) or a digital versatile disc-recordable (DVD-R).

The CPU 601, the ROM 602, the RAM 603, the auxiliary storage device 605, the medium drive 607, the display 608, the network I/F 609, the keyboard 611, the mouse 612, and the DVD drive 614 are communicably connected to each other via a bus line 610 such as an address bus or a data bus.

The hardware configuration of the control server 11 illustrated in FIG. 3 is given by way of example. The control server 11 does not necessarily include all the components illustrated in FIG. 3, or may include some other components. For example, the control server 11 may include a USB I/F for performing data communication with the printing machine 20.

The hardware configurations of the cloud system 30 and the PC 40 are substantially the same as the hardware configuration illustrated in FIG. 3. Further, the cloud system 30 is not limited to being configured by a single information processing apparatus, and may be configured by a plurality of information processing apparatuses.

### Hardware Configuration of Image Reading Apparatus

FIG. 4 is a block diagram illustrating a hardware configuration of an image reading apparatus according to the present embodiment. The hardware configuration of the image reading apparatus 12 according to the present embodiment is described below with reference to FIG. 4.

As illustrated in FIG. 4, the image reading apparatus 12 includes a controller 700 and a scanner 710.

The controller 700 is a control device that controls the operation of the image reading apparatus 12. As illustrated in FIG. 4, the controller 700 includes a CPU 701, a storage device 702, and a network I/F 703. The CPU 701, the storage device 702, the network I/F 703, and the scanner 710 are communicably connected to each other via a bus 720 such as an address bus or a data bus.

The CPU 701 is a processor that controls the operation of the image reading apparatus 12 by reading and executing programs stored in the storage device 702.

The storage device 702 is a device that is configured by, for example, a RAM, a ROM, or an HDD and stores various programs and data.

The network I/F 703, which may be implemented by an interface circuit, is an interface for communicating data with external apparatuses such as the cloud system 30 through the network N. The network I/F 703 supports, for example, ETHERNET and can make communication conforming to, for example, TCP/IP.

The scanner 710 is an image reading device that optically reads a printed matter to generate read image data.

The hardware configuration of the image reading apparatus 12 illustrated in FIG. 4 is given by way of example. The image reading apparatus 12 does not necessarily include all the components illustrated in FIG. 4, or may include some other components.

### Hardware Configuration of Information Terminal

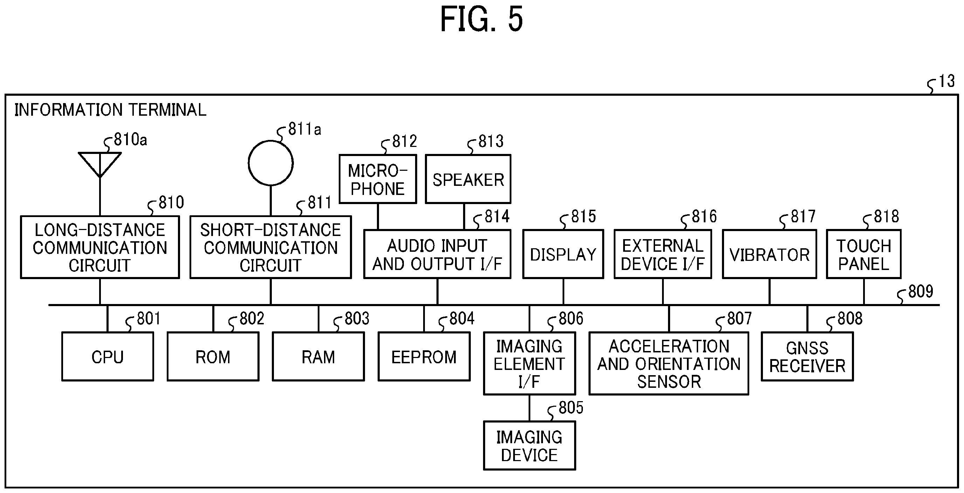

FIG. 5 is a block diagram illustrating a hardware configuration of an information terminal according to the present embodiment. The hardware configuration of the information terminal 13 according to the present embodiment is described below with reference to FIG. 5.

As illustrated in FIG. 5, the information terminal 13 includes a CPU 801, a ROM 802, a RAM 803, an electrically erasable programmable read-only memory (EEPROM) 804, an imaging device 805, an imaging element I/F 806, an acceleration and orientation sensor 807, and a global navigation satellite system (GNSS) receiver 808.

The CPU 801 is a processor that controls the entire operation of the information terminal 13. The ROM 802 is a non-volatile storage device that stores a program to be used for driving the CPU 801, such as an initial program loader (IPL). The RAM 803 is a volatile storage device used as a work area for the CPU 801. The EEPROM 804 is a non-volatile storage device that stores various data such as a control program.

The imaging device 805 is a built-in imaging device (camera) that, under the control of the CPU 801, captures an image of a subject using an image sensor such as a complementary metal oxide semiconductor (CMOS) to obtain image data. In alternative to the CMOS sensor, an imaging element such as a charge-coupled device (CCD) sensor may be used. The imaging element I/F 806, which may be implemented by an interface circuit, is an interface used for controlling the driving of the imaging device 805.

The acceleration and orientation sensor 807 includes various sensors such as an electromagnetic compass for detecting geomagnetism, a gyrocompass, and an acceleration sensor.

The GNSS receiver 808 is a receiving device that receives positioning signals from positioning satellites. The GNSS receiver 808 receives a global positioning system (GPS) signal from a GPS satellite, for example.

As illustrated in FIG. 5, the information terminal 13 further includes a long-range communication circuit 810, an antenna 810a, a short-range communication circuit 811, an antenna 811a, a microphone 812, a speaker 813, an audio input and output I/F 814, a display 815, an external device I/F 816, a vibrator 817, and a touch panel 818.

The long-range communication circuit 810 is a communication circuit that performs wireless communication with other devices via the antenna 810a in accordance with a standard such as WIRELESS FIDELITY through the network N.

The short-range communication circuit 811 is a communication circuit that performs short-range wireless communication with other devices via the antenna 811a in accordance with a standard such as near field communication (NFC) or BLUETOOTH.

The microphone 812 is a built-in circuit that converts audio into electrical signals. The speaker 813 is a built-in circuit that converts electrical signals into physical vibrations to generate audio such as music or voice. The audio input and output I/F 814 is an interface circuit for inputting and outputting audio signals between the microphone 812 and the speaker 813 under the control of the CPU 801. The microphone 812 and the speaker 813 may be configured as a headset, which are wirelessly connected to each other.

The display 815 is a display device that displays an image of an object and various icons, such as a liquid crystal display or an EL display. The external device I/F 816 is an interface circuit compliant with a standard such as the USB, which controls the communication of data with various external devices.

The vibrator 817 is a device that generates physical vibration under the control of the CPU 801.

The touch panel 818 serves as an input device, which allows a user to touch a screen of the display 815 to cause the information terminal 13 to perform various functions.

The CPU 801, the ROM 802, the RAM 803, the EEPROM 804, the imaging element I/F 806, the acceleration and orientation sensor 807, the GNSS receiver 808, the long-range communication circuit 810, the short-range communication circuit 811, the audio input and output I/F 814, the display 815, the external device I/F 816, the vibrator 817, and the touch panel 818 are communicably connected to each other via a bus line 809 such as an address bus or a data bus.

The hardware configuration of the information terminal 13 illustrated in FIG. 5 is given by way of example. The information terminal 13 does not necessarily include all the components illustrated in FIG. 5, or may include some other components.

### Functional Configuration and Operation of Color Adjustment System

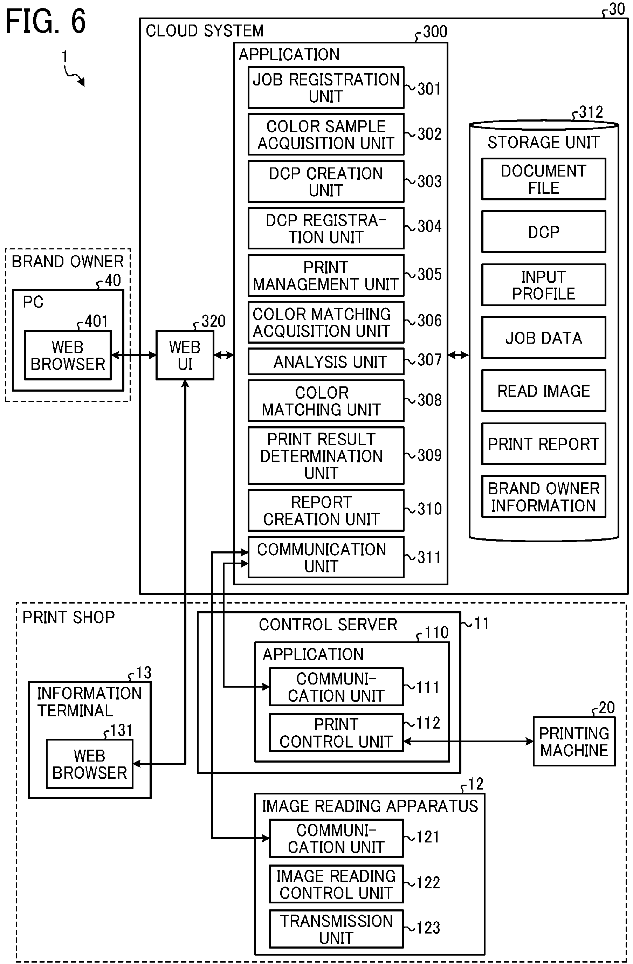

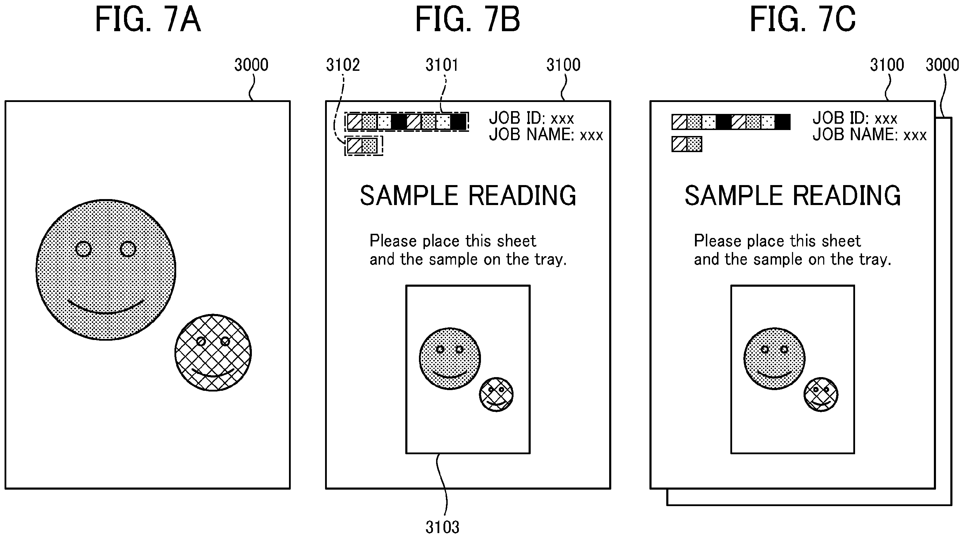

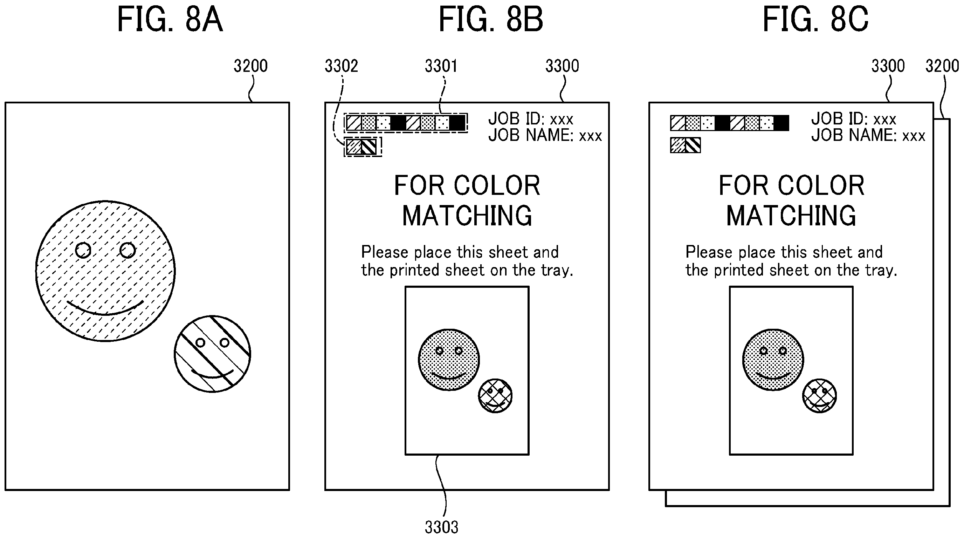

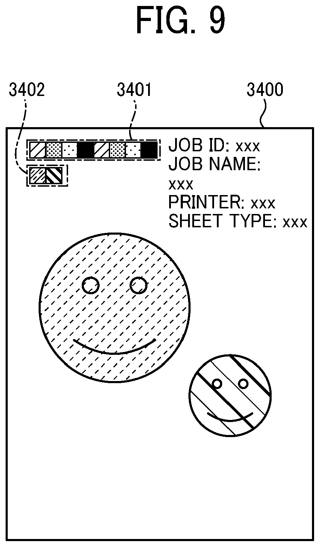

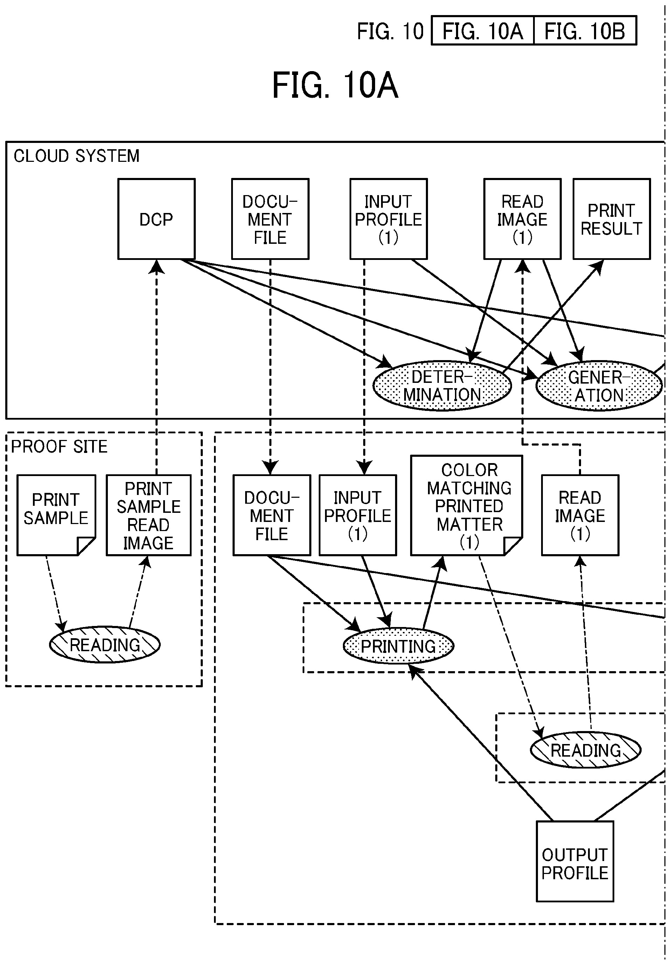

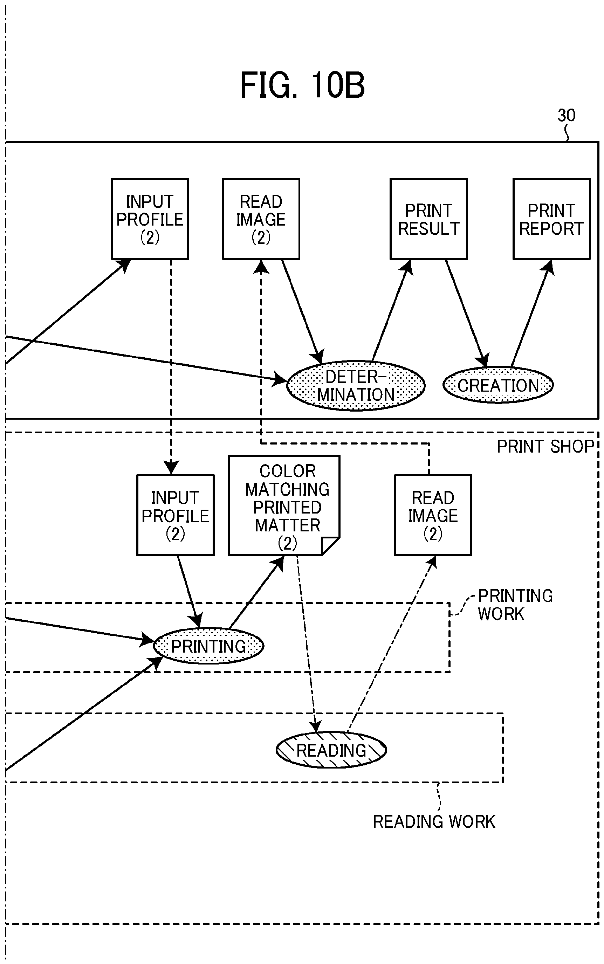

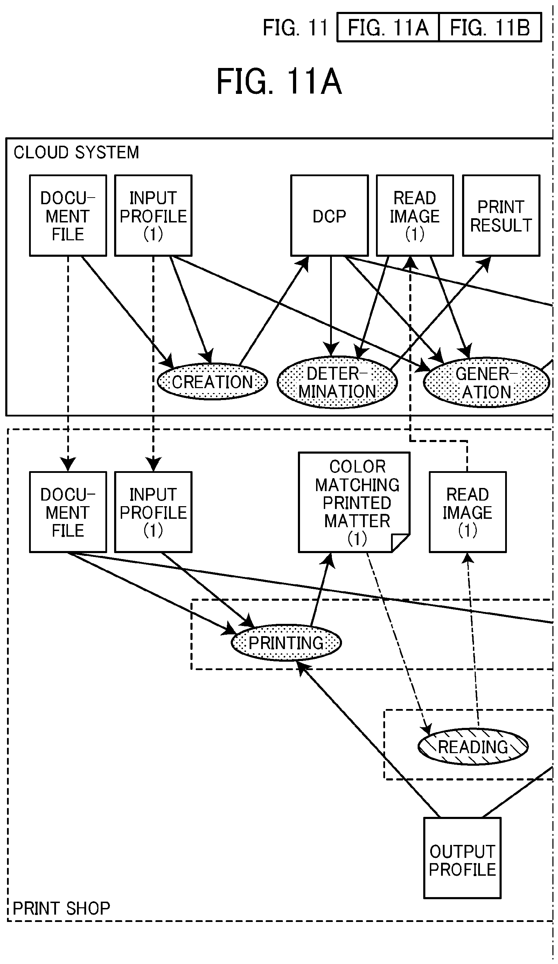

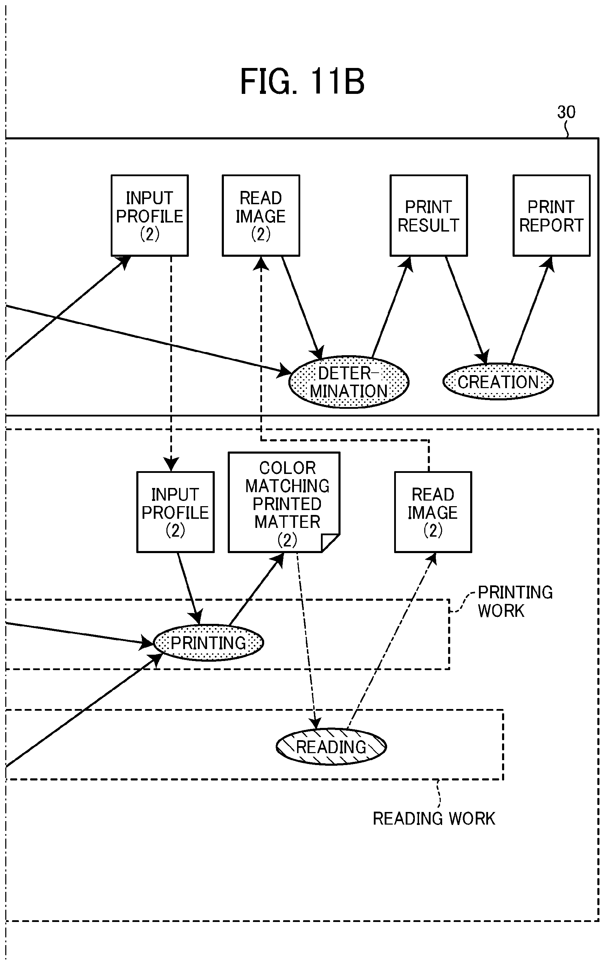

FIG. 6 is a block diagram illustrating a functional configuration of a color adjustment system according to the present embodiment. FIGS. 7A to 7C are diagrams each illustrating a print sample and a sample code printed matter, according to the present embodiment. FIGS. 8A to 8C are diagrams each illustrating a printed matter used for color matching and a printed matter of a code used for color matching, according to the present embodiment. The printed matter used for color matching is referred to as a color matching printed matter and the printed matter of a code used for color matching is referred to as a color matching code printed matter in the following description. FIG. 9 is a diagram illustrating another printed matter used for color matching (color matching printed matter), according to the present embodiment. FIG. 10 (FIGS. 10A and 10B) is a diagram illustrating a flow of the data processing executed by a color adjustment system when a print sample is used, according to the present embodiment. FIG. 11 (FIGS. 11A and 11B) is a diagram illustrating a flow of the data processing executed by a color adjustment system when a color conversion rule is designated, according to the present embodiment. With reference to FIGS. 6 to 11, the functional configuration and operation of the color adjustment system 1 according to the present embodiment are described.

As illustrated in FIG. 6, in the cloud system 30, an application 300 as software for implementing individual functions and a web user interface (UI) 320 (an example of a display control unit) are installed, and a storage unit 312 is also included. The cloud system 30 includes, as functional units implemented by the CPU 601 executing the application 300, a job registration unit 301 (an example of the first registration unit), a color sample acquisition unit 302 (an example of the second acquisition unit), a DCP creation unit 303 (an example of the first creation unit), a DCP registration unit 304 (an example of the second registration unit), a print management unit 305, a color matching acquisition unit 306 (an example of the first acquisition unit), an analysis unit 307, a color matching unit 308 (an example of a generation unit), a print result determination unit 309 (an example of a determination unit), a report creation unit 310 (an example of the second creation unit), and a communication unit 311.

The job registration unit 301 is a functional unit that acquires, from the PC 40 via the web UI 320, job data and setting information for creating a DCP. In the present embodiment, the setting information for creating a DCP includes, for example, a page number of a print sample used as a reference, a target color difference, and the name of a DCP in the case where the DCP is to be created using the print sample. In the case where a DCP is to be created based on a color conversion rule, the setting information includes, for example, a designated color conversion rule, a target color difference, and the name of the DCP. The job registration unit 301 registers (stores) the acquired job data and setting information in the storage unit 312.

The color sample acquisition unit 302 is a functional unit that acquires, via the communication unit 311, read image data (an example of print sample read image data) of the print sample and read image data (an example of sample code read image data) of the sample code printed matter (an example of the second printed matter) obtained by the image reading apparatus 12 executing the reading process. At this point, a print sample 3000 serving as the print sample and a sample code printed matter 3100 serving as the sample code printed matter are illustrated in FIGS. 7A and 7B, respectively.

As illustrated in FIG. 7B, the sample code printed matter 3100 includes a job code 3101 (an example of an identification code), a control code 3102, and a sample image portion 3103. The job code 3101 is a color code formed of patches of multiple colors, in which at least the job identification (ID) is encoded. The job code 3101 may be encoded not only with the job ID but also with the number of sheets of the print sample, the job name, or both, for example. The control code 3102 is a color code formed of patches of multiple colors, in which information indicating that the printed matter read together by the image reading apparatus 12 is a print sample is encoded. The sample image portion 3103 is a sample image representing a print sample obtained by printing texts or images based on the contents of the document file indicated by the job data registered by the job registration unit 301. For the descriptive purposes, printing of texts or images based on the contents of a document file may be referred to as printing of the document file in the following description. In other words, by checking the sample image portion 3103, a person (such as a printing operator or a proofreader) who operates the image reading apparatus 12 to execute the reading process can surely cause the print sample 3000 to be read. The print sample 3000 may be sent to an operator (such as a printing operator or a proofreader) who is in charge of the reading process by, for example, mail. Since the print sample 3000 is sent by mail separately from the order of the job to be received via the network, the print sample 3000 needs to be handled as a physical item. Accordingly, in order to confirm which job the print sample corresponds to, the contents or the images included in the job data of the job need to be individually checked on the system. However, by printing out the sample code printed matter 3100 in advance, the sample image portion 3103 and the print sample 3000 can be checked in comparison. As a result, the confirmation work performed by the printing operator becomes easy.

The sample code printed matter 3100 may be printed by any printing machine as long as the sample code printed matter 3100 is printed in color to the extent that the job code 3101 and the control code 3102 can be decoded. For example, when the print sample is read at a proofreading site as illustrated in FIG. 10 to be described later, a sample code printed matter may be printed by any printing machine at the proofreading site. The job code 3101 and the control code 3102 are not limited to color codes, but may be, for example, two-dimensional codes.

As illustrated in FIG. 7C, the person who operates the image reading apparatus 12 to execute the reading process sets the sample code printed matter 3100 and the print sample 3000 on the image reading apparatus 12 in a state where the sample code printed matter 3100 is on top the print sample 3000, and causes the reading process to be executed.

The DCP creation unit 303 is a functional unit that creates a DCP based on the print sample read image data acquired by the color sample acquisition unit 302 and the setting information for creating a DCP registered by the job registration unit 301 in the case where a DCP is to be created using the print sample. In the case where a DCP is to be created based on a color conversion rule, the DCP creation unit 303 creates a DCP based on the setting information for creating a DCP registered by the job registration unit 301 (including designation information of the color conversion rule) and the document file (such as a portable document format (PDF) file) included in the job data. The color conversion rule refers to a rule of a color sample conforming to an international standard such as "Japan Color," "G7," or "Fogra," or a rule of custom color determined by individual print shops.

The DCP created by the DCP creation unit 303 is stored in the storage unit 312 with identification information such as a part number. A DCP designated with the identification information such as a DCP created in the past can be used when an input profile is generated by the color matching unit 308.

The DCP registration unit 304 is a functional unit that registers (stores) the DCP created by the DCP creation unit 303 in the storage unit 312 in association with the job data registered by the job registration unit 301.

The print management unit 305 is a functional unit that transmits, to the control server 11 via the communication unit 311, a print instruction to execute the printing process according to the job data using an existing input profile or an input profile generated by the color matching unit 308 executing color matching.

The color matching acquisition unit 306 is a functional unit that acquires, via the communication unit 311, read image data of the color matching printed matter (color matching read image data) and read image data of the color matching code printed matter (color matching code read image data) obtained by the image reading apparatus 12 executing the reading process. Each of the color matching printed matter and the color matching code printed matter corresponds to the "first printed matter" of the present disclosure. Also, each of the color matching read image data and the color matching code read image data corresponds to the "first read image data" of the present disclosure. A color matching printed matter 3200 serving as the color matching printed matter and a color matching code printed matter 3300 serving as the color matching code printed matter are illustrated in FIGS 8A and 8B, respectively. The color matching printed matter 3200 and the color matching code printed matter 3300 are printed matters printed by the printing machine 20 using an input profile.

As illustrated in FIG. 8B, the color matching code printed matter 3300 includes a job code 3301 (an example of an identification code), a control code 3302, and a sample image portion 3303. The job code 3301 is a color code formed of patches of multiple colors, in which at least the job ID is encoded. The job code 3301 may be encoded not only with the job ID but also with the number of sheets of the color matching printed matter, the job name, or both, for example. The control code 3302 is a color code formed of patches of multiple colors, in which information indicating that the printed matter read together by the image reading apparatus 12 is a color matching printed matter is encoded. The sample image portion 3303 is a sample image representing an image of the contents of the document file indicated by the job data registered by the job registration unit 301. In other words, by checking the sample image portion 3303, the printing operator who operates the image reading apparatus 12 to execute the reading process can surely cause the color matching printed matter 3200 to be read.

As illustrated in FIG. 8C, the printing operator who operates the image reading apparatus 12 to execute the reading process sets the color matching code printed matter 3300 and the color matching printed matter 3200 on the image reading apparatus 12 in a state where the color matching code printed matter 3300 is on top the color matching printed matter 3200, and causes the reading process to be executed.

As illustrated in FIG. 9, the color matching printed matter on which the image reading apparatus 12 executes the reading process may be a color matching printed matter 3400 (an example of the first printed matter) obtained by arranging the job code 3301 and the control code 3302 illustrated in FIG. 8B on the color matching printed matter 3200 illustrated in FIG. 8A. As illustrated in FIG. 9, the color matching printed matter 3400 includes a job code 3401 and a control code 3402. The job code 3401 and the control code 3402 are substantially the same as the job code 3301 and the control code 3302 described above, respectively. In this way, the job code 3401 used for analyzing the job ID and the image for which a print result is determined are combined on a single sheet. As a result, the number of sheets is saved. In addition, the possibility of operational errors that may occur when reading the color matching printed matter 3200 and the color matching code printed matter 3300 in an overlapping manner is reduced.

The analysis unit 307 is a functional unit that decodes and analyzes the job code and the control code that are color codes included in the sample code read image data acquired by the color sample acquisition unit 302 or the color matching code read image data acquired by the color matching acquisition unit 306.

The color matching unit 308 is a functional unit that generates, based on an existing or already generated input profile, the color matching read image data acquired by the color matching acquisition unit 306, and the DCP corresponding to the color matching read image data, an input profile that facilitates color conversion to bring the color of a printed matter to be printed based on the job data closer to the color indicated by the DCP, and executes color matching. In this case, the color matching unit 308 may update an existing input profile to generate an input profile. The input profile generated by the color matching unit 308 is managed by the control server 11 or the cloud system 30 with the identification information such as a part number, and may be used for the printing process of other job data. Alternatively, the color matching unit 308 may newly generate an input profile, instead of updating an existing input profile to generate an input profile.

The print result determination unit 309 is a functional unit that determines, for example, the average color difference ΔE between the read image data (color matching read image data) of the color matching printed matter printed using the existing input profile or the input profile generated by the color matching unit 308 and the DCP, and outputs a determination result as a print result. The print result determination unit 309 also generates a difference image between the color matching read image data and the DCP.

The report creation unit 310 is a functional unit that creates a print report based on the print result (determination result) output by the print result determination unit 309. The report creation unit 310 registers (stores) the created print report in the communication unit 311.

The communication unit 311 is a functional unit that performs data communication with the control server 11, the image reading apparatus 12, the information terminal 13, and the PC 40 via the network N.

The storage unit 312 is a functional unit that stores various kinds of data. As illustrated in FIG. 6, examples of the information stored in the storage unit 312 include job data registered by the PC 40, a document file corresponding to the job data, a DCP created by the DCP creation unit 303, an existing input profile, an input profile generated by the color matching unit 308, various kinds of read image data obtained by the image reading apparatus 12 executing the reading process, a print report created by the report creation unit 310, brand owner information, printing company information, and printer information. The storage unit 312 is implemented by the auxiliary storage device 605 illustrated in FIG. 3.

At least a part of functional units among the functional units illustrated in FIG. 6 implemented by the application 300 of the cloud system 30 being executed may be implemented by a hardware circuit such as a field-programmable gate array (FPGA) or an ASIC.

Further, each functional unit illustrated in FIG. 6 implemented by the application 300 being executed is a conceptual representation of a function, and the functional configuration of the application 300 is not limited thereto. For example, two or more of the functional units of the application 300 illustrated as independent units in FIG. 6 may be integrated into a single functional unit. By contrast, a plurality of functions provided by a single functional unit of the application 300 illustrated in FIG. 6 may be divided and allocated to a plurality of functional units.

The web UI 320 is software that communicates with a web browser 131 of the information terminal 13 and a web browser 401 of the PC 40, provides information on a screen to be displayed by each browser, and receives information input by an operator via the screen displayed by each browser. In addition, the web UI 320 causes the web browser 131 of the information terminal 13 and the web browser 401 of the PC 40 to perform or change the display from the cloud system 30 in some cases. The web UI 320 is an example of a display control unit that provides an individual apparatus with screen information based on which a screen is displayed by the individual apparatus.

As illustrated in FIG. 6, in the control server 11, an application 110 is installed as software for implementing each function. The control server 11 includes, as functional units implemented by the CPU 601 executing the application 110, a communication unit 111 and a print control unit 112.

The communication unit 111 is a functional unit that performs data communication with the cloud system 30 and the printing machine 20 using the network I/F 609 via the network N. In particular, the communication unit 111 establishes a communication connection based on, for example, Web Socket to implement bidirectional communication with the cloud system 30.

The print control unit 112 is a functional unit that controls the printing machine 20 to execute the printing process. For example, the print control unit 112 causes the printing machine 20 to execute the printing process according to job data in accordance with a print instruction from the cloud system 30. In addition, the print control unit 112 transmits an existing input profile or an input profile generated by the color matching unit 308 to the printing machine 20 in order to apply the input profile.

At least a part of functional units among the functional units illustrated in FIG. 6 implemented by the application 110 of the control server 11 being executed may be implemented by a hardware circuit such as a FPGA or an ASIC.

Further, each functional unit illustrated in FIG. 6 implemented by the application 110 being executed is a conceptual representation of a function, and the functional configuration of the application 110 is not limited thereto. For example, two or more of the functional units of the application 110 illustrated as independent units in FIG. 6 may be integrated into a single functional unit. By contrast, a plurality of functions provided by a single functional unit of the application 110 illustrated in FIG. 6 may be divided and allocated to a plurality of functional units.

As illustrated in FIG. 6, the image reading apparatus 12 includes, as functional units implemented by the CPU 601 executing programs, a communication unit 121, an image reading control unit 122, and a transmission unit 123.

The communication unit 121 is a functional unit that performs data communication with the cloud system 30 using the network I/F 703 via the network N.

The image reading control unit 122 is a functional unit that controls the scanner 710 to execute the reading process. The image reading control unit 122 acquires print sample read image data of the print sample and sample code read image data of the sample code printed matter obtained by the scanner 710 executing the reading process. The image reading control unit 122 also acquires color matching read image data and color matching code read image data obtained by the scanner 710 executing the reading process on the color matching printed matter and the color matching code printed matter, respectively, which are printed by the printing machine 20 using an existing input profile or an input profile generated by the color matching unit 308.

The transmission unit 123 is a functional unit that transmits, under the control of the image reading control unit 122, the print sample read image data, the sample code read image data, the color matching read image data, and the color matching code read image data obtained by the scanner 710 executing the reading process to the cloud system 30 via the communication unit 121.

At least a part of functional units among the functional units illustrated in FIG. 6 implemented by the programs installed in the image reading apparatus 12 being executed may be implemented by a hardware circuit such as a FPGA or an ASIC.

Further, each functional unit of the image reading apparatus 12 illustrated in FIG. 6 is a conceptual representation of a function, and the functional configuration of the image reading apparatus 12 is not limited thereto. For example, two or more of the functional units of the image reading apparatus 12 illustrated as independent units in FIG. 6 may be integrated into a single functional unit. By contrast, a plurality of functions provided by a single functional unit of the image reading apparatus 12 illustrated in FIG. 6 may be divided and allocated to a plurality of functional units.

As illustrated in FIG. 6, in the information terminal 13, the web browser 131 (an example of a reception unit) is installed. The web browser 131 is software for receiving input of various kinds of data and input of operations for executing the processing through a screen provided by the web UI 320 of the cloud system 30.

As illustrated in FIG. 6, in the PC 40, the web browser 401 (an example of a reception unit) is installed. The web browser 401 is software for receiving input of various kinds of data and input of operations for executing the processing through a screen provided by the web UI 320 of the cloud system 30.

Subsequently, a flow of the data processing in the case where a DCP is created using a print sample is described with reference to FIG. 10. In the present embodiment, it is assumed that the print sample is read by the image reading apparatus 12 installed at the proofreading site. In other words, it is assumed that the proofreading site and the print shop each own the image reading apparatus 12.

The image reading control unit 122 of the image reading apparatus 12 at the proofreading site causes the scanner 710 to execute the reading process on the print sample and the sample code printed matter to obtain print sample read image data and sample code read image data. The transmission unit 123 of the image reading apparatus 12 at the proofreading site transmits the print sample read image data and the sample code read image data obtained by the scanner 710 executing the reading process to the cloud system 30 via the communication unit 121. The color sample acquisition unit 302 of the cloud system 30 acquires, via the communication unit 311, the print sample read image data and the sample code read image data obtained by the image reading apparatus 12 at the proofreading site executing the reading process. The analysis unit 307 of the cloud system 30 decodes and analyzes the job code and the control code that are color codes included in the sample code read image data acquired by the color sample acquisition unit 302. The DCP creation unit 303 of the cloud system 30 creates a DCP based on the print sample read image data acquired by the color sample acquisition unit 302 and the setting information for creating a DCP registered by the job registration unit 301. The DCP registration unit 304 of the cloud system 30 registers (stores) the DCP created by the DCP creation unit 303 in the storage unit 312 in association with the job data registered by the job registration unit 301.

The print control unit 112 of the control server 11 receives the job data together with a print instruction from the cloud system 30. The print control unit 112 also receives an existing input profile from the cloud system 30. The print control unit 112 causes the printing machine 20 to execute the printing process based on the document file indicated by the job data using the existing input profile (an input profile (1) illustrated in FIG. 10) and the output profile, and output a color matching printed matter (a color matching printed matter (1) illustrated in FIG. 10). Substantially at the same time, the print control unit 112 causes the printing machine 20 to output a color matching code printed matter including a job code in which the job ID of the job data is encoded and a control code.

The printing operator sets the color matching code printed matter and the color matching printed matter on the image reading apparatus 12 in a state where the color matching code printed matter is on top of the color matching printed matter. The image reading control unit 122 of the image reading apparatus 12 acquires color matching read image data (a read image (1) illustrated in FIG. 10) and color matching code read image data obtained by the scanner 710 executing the reading process on the color matching printed matter and the color matching code printed matter, respectively. The transmission unit 123 of the image reading apparatus 12 transmits the color matching read image data and the color matching code read image data to the cloud system 30 via the communication unit 121.

The color matching acquisition unit 306 of the cloud system 30 acquires, via the communication unit 311, the color matching read image data and the color matching code read image data obtained by the image reading apparatus 12 executing the reading process. The analysis unit 307 of the cloud system 30 decodes and analyzes the job code and the control code that are color codes included in the color matching code read image data acquired by the color matching acquisition unit 306. The print result determination unit 309 of the cloud system 30 determines, for example, the average color difference ΔE between the color matching read image data to which the existing input profile is applied and the DCP, and outputs a determination result as a print result. In the present embodiment, it is assumed that the determination result is no good (not satisfactory).

The color matching unit 308 generates, based on the existing input profile, the color matching read image data acquired by the color matching acquisition unit 306, and the DCP corresponding to the color matching read image data, an input profile (an input profile (2) illustrated in FIG. 10) that facilitates color conversion to bring the color of a printed matter to be printed based on the job data closer to the color indicated by the DCP.

The print control unit 112 of the control server 11 receives the input profile generated by the color matching unit 308 from the cloud system 30. The print control unit 112 causes the printing machine 20 to execute the printing process based on the document file indicated by the job data using the input profile and the output profile, and output a color matching printed matter (a color matching printed matter (2) illustrated in FIG. 10). Substantially at the same time, the print control unit 112 causes the printing machine 20 to output a color matching code printed matter including a job code in which the job ID of the job data is encoded and a control code.

The printing operator sets the color matching code printed matter and the color matching printed matter on the image reading apparatus 12 in a state where the color matching code printed matter is on top of the color matching printed matter. The image reading control unit 122 of the image reading apparatus 12 acquires color matching read image data (a read image (2) illustrated in FIG. 10) and color matching code read image data obtained by the scanner 710 executing the reading process on the color matching printed matter and the color matching code printed matter, respectively. The transmission unit 123 of the image reading apparatus 12 transmits the color matching read image data and the color matching code read image data to the cloud system 30 via the communication unit 121.

The color matching acquisition unit 306 of the cloud system 30 acquires, via the communication unit 311, the color matching read image data and the color matching code read image data obtained by the image reading apparatus 12 executing the reading process. The analysis unit 307 of the cloud system 30 decodes and analyzes the job code and the control code that are color codes included in the color matching code read image data acquired by the color matching acquisition unit 306. The print result determination unit 309 of the cloud system 30 determines, for example, the average color difference ΔE between the color matching read image data to which the input profile generated by the color matching unit 308 is applied and the DCP, and outputs a determination result as a print result. In the present embodiment, it is assumed that the determination result is OK (satisfactory). The report creation unit 310 of the cloud system 30 creates a print report based on the print result output by the print result determination unit 309. The report creation unit 310 registers (stores) the created print report in the communication unit 311.

Subsequently, a flow of the data processing in the case where a DCP is created based on a color conversion rule is described with reference to FIG. 11.

The DCP creation unit 303 of the cloud system 30 creates a DCP based on the setting information for creating a DCP registered by the job registration unit 301 (including designation information of the color conversion rule) and the document file indicated by the job data. The DCP registration unit 304 of the cloud system 30 registers (stores) the DCP created by the DCP creation unit 303 in the storage unit 312 in association with the job data registered by the job registration unit 301. The subsequent flow of the data processing is substantially the same as the flow illustrated in FIG. 10.

### Data Structure of Color Adjustment System

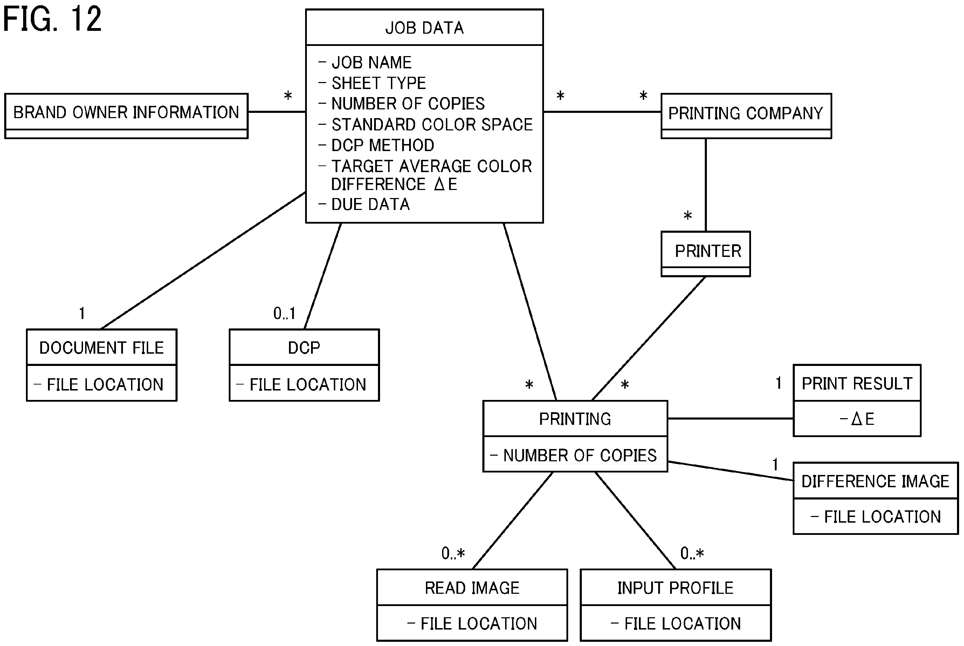

FIG. 12 is a diagram illustrating the data structure of data handled by a color adjustment system according to the present embodiment. An overview of the data structure of the data handled by the color adjustment system 1 according to the present embodiment is described below with reference to FIG. 12.

The information included in the job data acquired by the job registration unit 301 and registered in the storage unit 312 of the cloud system 30 includes the following data items:
- JOB NAME;
- SHEET TYPE;
- NUMBER OF COPIES;
- STANDARD COLOR SPACE;
- DCP METHOD;
- TARGET AVERAGE COLOR DIFFERENCE ΔE; and
- DUE DATE

The job data includes the document file such as a PDF file. In the present embodiment, the document file is illustrated in FIG. 12 as information associated with the job data. The information of the document file associated with the job data may actually be a file location indicating a storage area where the document file is stored.

The job data is also associated with the DCP created by the DCP creation unit 303. The information of the DCP associated with the job data may actually be a file location indicating a storage area where the DCP is stored.

The job data is also associated with information on a printing company that executes the processing for the job data. Further, the information on the printing company is associated with information on the printers (printing machines) owned by the printing company.

Further, the job data is associated with information (brand owner information) on a brand owner who requests printing and information on the printing. The information on the printing is information for managing the printing process executed by a plurality of print shops and a plurality of printing machines for the same job data, and includes at least information on the number of copies to be printed by each printing machine. The information on the printing is associated with various kinds of read images (print sample read image data, sample code read image data, color matching read image data, and color matching code read image data), input profiles (an existing input profile and an input profile generated by the color matching unit 308), a print result determined by the print result determination unit 309, and a difference image generated by the print result determination unit 309. The information of the various kinds of read images, the input profiles, and the difference image associated with the information on the printing may actually be file locations indicating storage areas in which these images and profiles are stored. The print result includes at least an average color difference ΔE.

### Processing to Register Job and Color Sample in Color Adjustment System

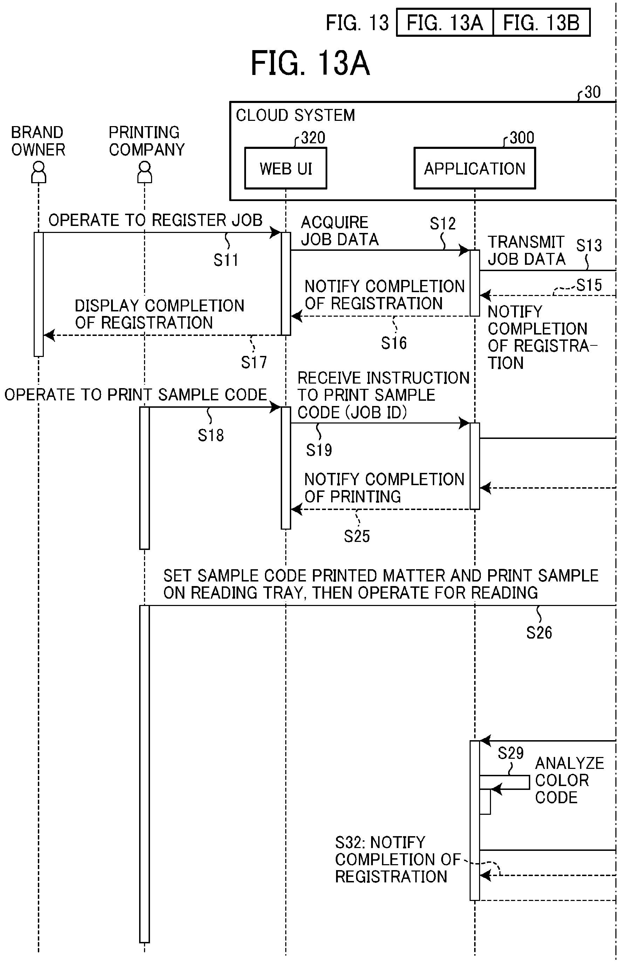

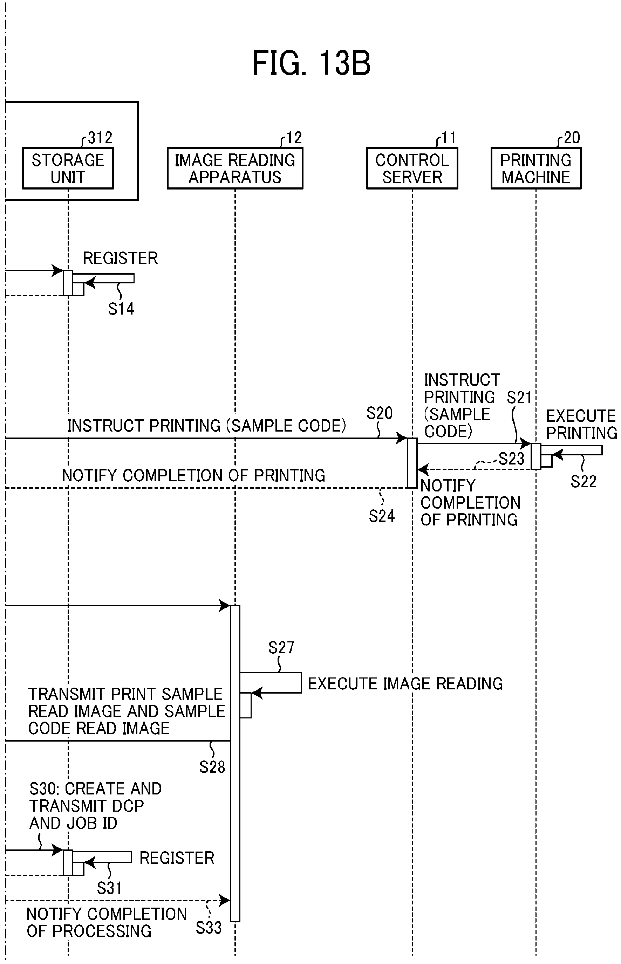

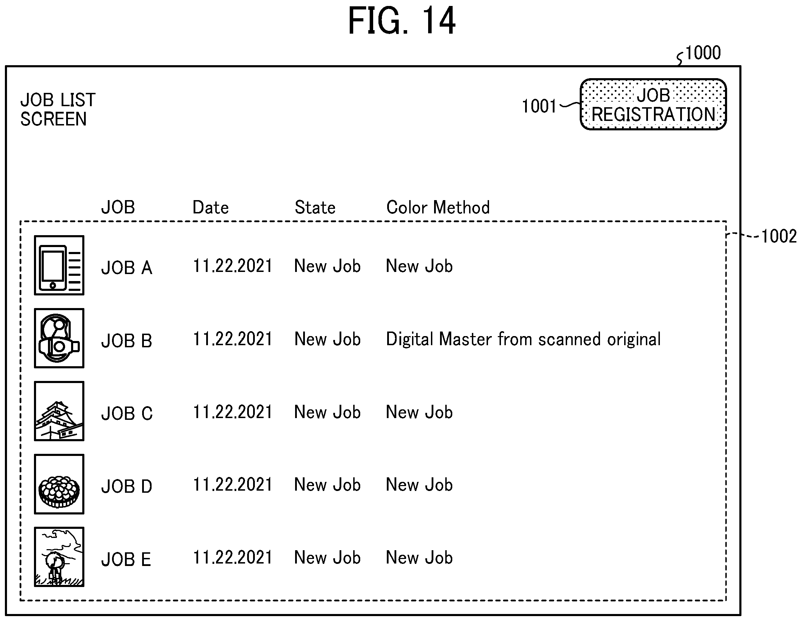

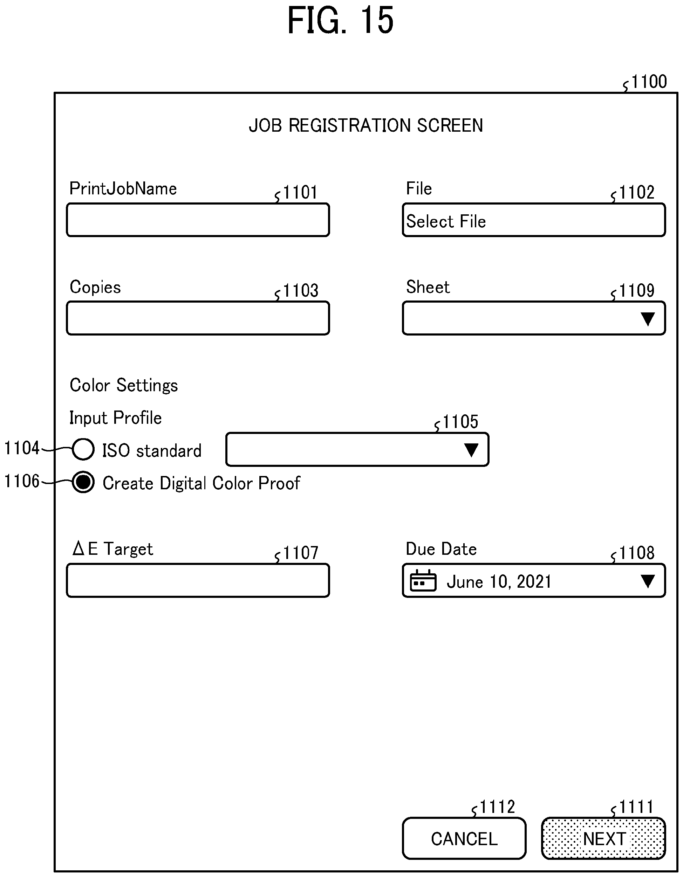

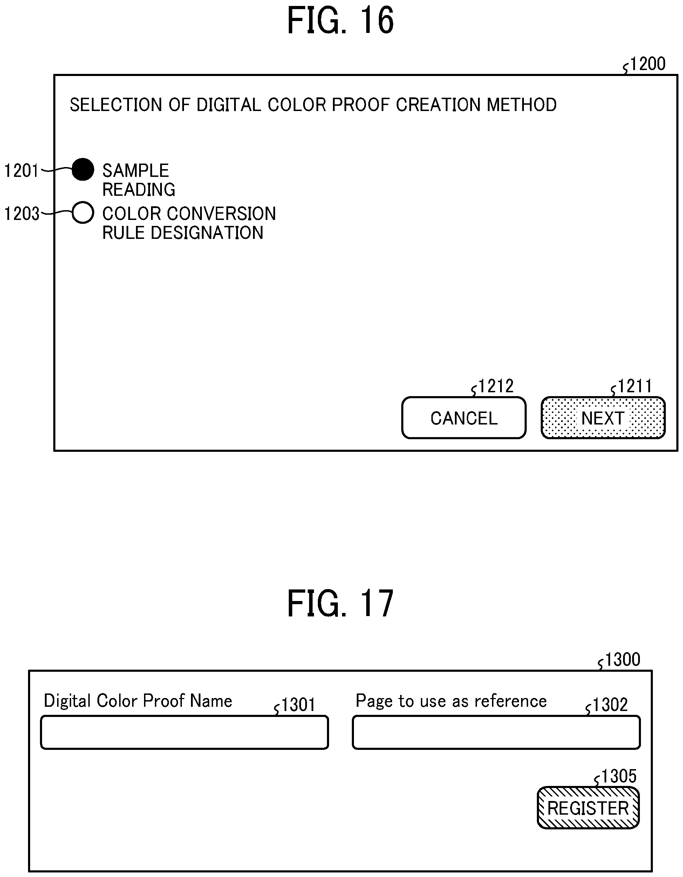

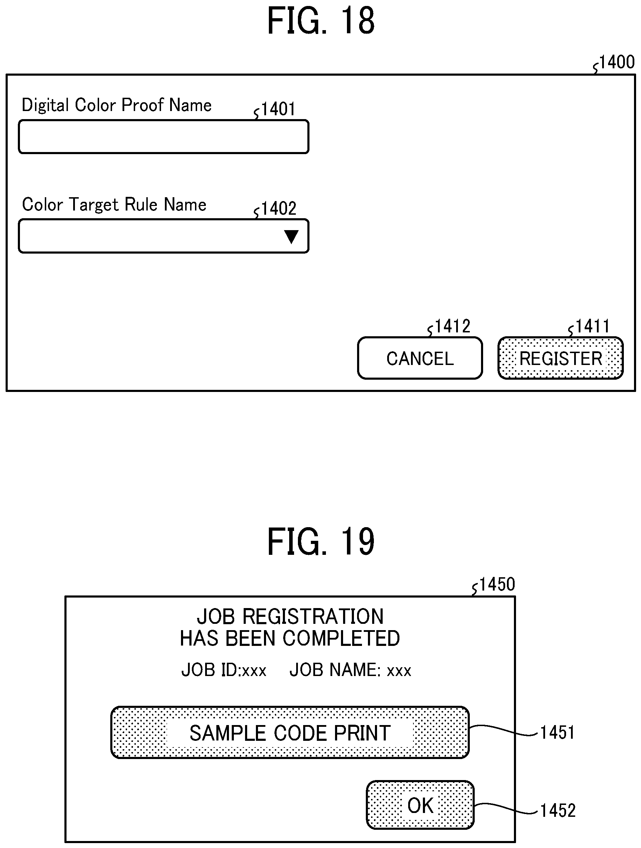

FIG. 13 (FIGS. 13A and 13B) is a sequence chart illustrating the processing to register a job and a color sample executed by a color adjustment system according to the present embodiment. FIG. 14 is a diagram illustrating a job list screen according to the present embodiment. FIG. 15 is a diagram illustrating a job registration screen according to the present embodiment. FIG. 16 is a diagram illustrating a DCP creation method selection screen according to the present embodiment. FIG. 17 is a diagram illustrating a DCP setting screen according to the present embodiment. FIG. 18 is a diagram illustrating a color conversion rule designation screen according to the present embodiment. FIG. 19 is a diagram illustrating a job registration completion screen according to the present embodiment. With reference to FIGS. 13 to 19, the flow of the processing to register a job and a color sample executed by the color adjustment system 1 according to the present embodiment is described. In FIG. 13, it is assumed that the print sample is read by the image reading apparatus 12 installed at the print shop.

### Step S11

The brand owner performs, via the web browser 401 of the PC 40, an operation to register a job for requesting the printing of a document file. Specifically, the brand owner first causes a job list screen 1000 illustrated in FIG. 14 to be displayed on the web browser 401.

The job list screen 1000 is a screen for displaying a list of pieces of job data that have already been registered and for newly registering pieces of job data. As illustrated in FIG. 14, the job list screen 1000 includes a job registration button 1001 and a job list display area 1002. The job registration button 1001 is a button used for registering job data for which printing is newly requested in the cloud system 30. The job list display area 1002 is an area in which a list of pieces of job data that have already been registered in the cloud system 30 is displayed.

When the brand owner presses the job registration button 1001, the web browser 401 causes a job registration screen 1100 illustrated in FIG. 15 to be displayed.

The job registration screen 1100 is a screen for registering job data for which printing is newly requested. As illustrated in FIG. 15, the job registration screen 1100 includes a job name input field 1101, a document file designation field 1102, a number of copies input field 1103, a standard selection section 1104, a standard profile designation field 1105, a DCP creation selection section 1106, a target color difference input field 1107, a due date input field 1108, a sheet type selection field 1109, a next button 1111, and a cancel button 1112.

The job name input field 1101 is an input field used for setting a name of job data for which printing is newly requested. The document file designation field 1102 is a field used for selectively designating a document file, such as a PDF file, subjected to printing from files stored in, for example, the PC 40. The number of copies input field 1103 is an input field used for setting the number of copies to be printed for the document file. The standard selection section 1104 is a radio button used for selecting the use of an input profile (standard input profile) of the standard of International Organization for Standardization (ISO) without creating a DCP. The standard profile designation field 1105 is a field used for selectively designating a standard input profile in the case where the standard selection section 1104 is selected. The DCP creation selection section 1106 is a radio button used for selecting creation of a DCP. The target color difference input field 1107 is an input field used for setting a target average color difference ΔE in comparison with the DCP. The due date input field 1108 is an input field used for setting a due date of the delivery of a printed matter for the job data to be newly registered. The sheet type selection field 1109 is a field used for selecting the type of sheet on which texts or images are printed based on the contents of the document file. The next button 1111 is a button used for registering job data in the case where the standard selection section 1104 is selected. In the case where the DCP creation selection section 1106 is selected, the next button 1111 serves as a button for transitioning to a DCP creation method selection screen 1200 illustrated in FIG. 16. The cancel button 1112 is a button used for canceling the settings input on the job registration screen 1100 and returning to the job list screen 1000.

The brand owner sets various items of setting information on the job registration screen 1100, and presses the next button 1111 in a state where the DCP creation selection section 1106 is selected. Then, the web browser 401 causes the DCP creation method selection screen 1200 illustrated in FIG. 16 to be displayed.

The DCP creation method selection screen 1200 is a screen for selecting a DCP creation method. As illustrated in FIG. 16, the DCP creation method selection screen 1200 includes a sample reading selection section 1201, a color conversion rule designation selection section 1203, a next button 1211, and a cancel button 1212.

The sample reading selection section 1201 is a radio button to be selected when the reading process is to be executed on a print sample. The color conversion rule designation selection section 1203 is a radio button to be selected when a DCP is to be created based on a color conversion rule. The next button 1211 is a button used for transitioning to a DCP setting screen 1300 illustrated in FIG. 17 in the case where the sample reading selection section 1201 is selected.

In the case where the color conversion rule designation selection section 1203 is selected, the next button 1211 servers as a button for transitioning to a color conversion rule designation screen 1400 illustrated in FIG. 18. The cancel button 1212 is a button used for returning to the job registration screen 1100.

The color conversion rule designation screen 1400 is a screen for causing the cloud system 30 to create a DCP in accordance with a color conversion rule. As illustrated in FIG. 18, the color conversion rule designation screen 1400 includes a DCP name input field 1401, a color conversion rule selection field 1402, a registration button 1411, and a cancel button 1412.

The DCP name input field 1401 is an input field used for setting a name of a DCP to be created. The color conversion rule selection field 1402 is a button used for selecting a rule of a color sample conforming to the international standard such as "Japan Color," "G7," or "Fogra," or a rule of custom color determined by individual print shops. The registration button 1411 is a button used for transmitting and registering, to and in the cloud system 30, the setting information (including the setting to create a DCP based on a color conversion rule) input for the cloud system 30 on the job registration screen 1100, the DCP creation method selection screen 1200, and the color conversion rule designation screen 1400 and the job data. The cancel button 1412 is a button used for returning to the DCP creation method selection screen 1200.

When the brand owner presses the next button 1211 on the DCP creation method selection screen 1200 in a state where the sample reading selection section 1201 is selected, the web browser 401 causes the DCP setting screen 1300 illustrated in FIG. 17 to be displayed. In the following description, it is assumed that the DCP setting screen 1300 is displayed on the web browser 401 of a communication terminal held by the brand owner, setting information of a DCP (a name of a DCP and page setting) is registered in the cloud system 30, and the reading process on a print sample is executed by, for example, the printing operator.

The DCP setting screen 1300 is a screen for making settings for a DCP to be created. As illustrated in FIG. 17, the DCP setting screen 1300 includes a DCP name input field 1301, a reference page designation field 1302, and a registration button 1305.

The DCP name input field 1301 is an input field used for setting a name of a DCP to be created. The reference page designation field 1302 is an input field used for setting a reference page of the print sample, which is subjected to reading executed by the image reading apparatus 12. Alternatively, the reference page designation field 1302 may be a field used for registering all pages of the print sample as a DCP by reading all the pages of the print sample, as well as for designating the page number of the pages of the print sample (DCP) to be used at the time of executing the printing process according to the job data. The registration button 1305 is a button used for transmitting and registering, to and in the cloud system 30, the setting information (including the settings of the name of the DCP and the reference page) input for the cloud system 30 on the job registration screen 1100, the DCP creation method selection screen 1200, and the DCP setting screen 1300 and the job data.

When the brand owner presses the registration button 1305 on the DCP setting screen 1300, the web browser 401 transmits, to the cloud system 30, the job data for requesting printing of a document file and the setting information input on the job registration screen 1100, the DCP creation method selection screen 1200, and the DCP setting screen 1300.

### Step S12

The job registration unit 301 of the cloud system 30 acquires the job data and the setting information for creating a DCP from the PC 40 via the web UI 320.

### Steps S13 and S14

The job registration unit 301 of the cloud system 30 registers (stores) the acquired job data and setting information in the storage unit 312. At this time, the job registration unit 301 issues a job ID and registers the job data and the setting information in the storage unit 312.

### Steps S15 and S16

The job registration unit 301 transmits a notification of the completion of the registration in the storage unit 312 to the web UI 320.

### Step S17

The web UI 320 causes a job registration completion screen 1450 illustrated in FIG. 19 to be displayed on the web browser 401 of the PC 40.

The job registration completion screen 1450 is a screen for displaying the notification of the completion of the registration of the job data and the setting information. For example, as illustrated in FIG. 19, the job ID issued for the job data and the job name included in the setting information may be displayed on the job registration completion screen 1450. As illustrated in FIG. 19, the job registration completion screen 1450 includes a sample code print button 1451 and an OK button 1452.

The sample code print button 1451 is a button used for causing a printing machine (a printing machine owned by the brand owner in this case) to print a sample code printed matter. In other words, the sample code print button 1451 is used when the sample code printed matter is read by an image reading apparatus held by the brand owner. The OK button 1452 is a button to be pressed when the registration of the job is confirmed, and is a button for returning to the job list screen 1000.

By the brand owner pressing the OK button 1452, the registration of the job data is completed.

### Step S18

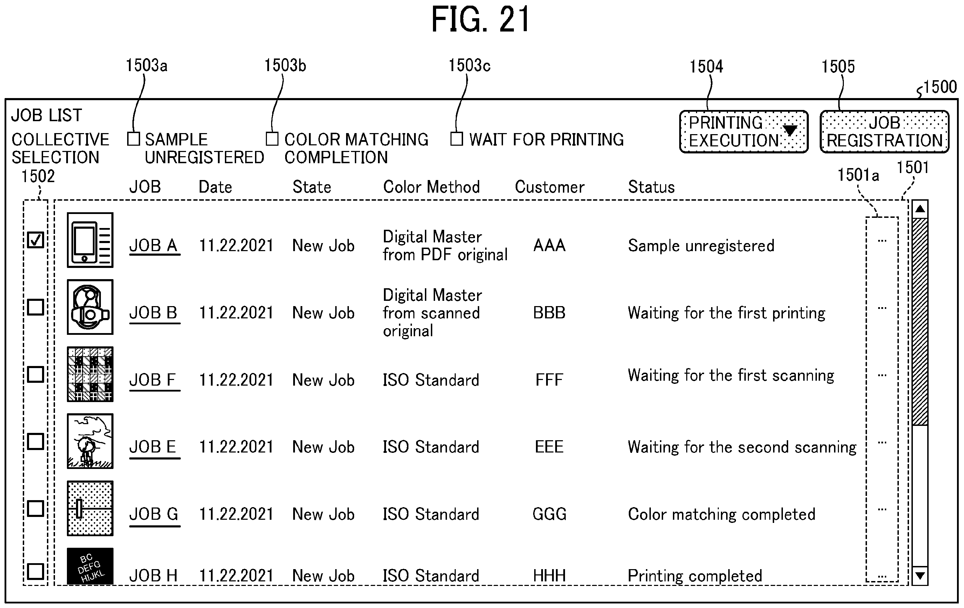

The printing operator performs, through the web browser 131 of the information terminal 13, an operation for printing a sample code printed matter for job data for which a DCP is not created. Specifically, the printing operator selects job data whose status is "Sample unregistered" (that is, a DCP is not created) on a job selection screen 1500 illustrated in FIG. 21, which will be described later, and performs an operation to execute printing. The job selection screen 1500 will be described in detail later with reference to FIG. 21.

When the operation for printing the sample code printed matter is performed by the printing operator on the job selection screen 1500, the web browser 131 transmits a print instruction to print the sample code printed matter in which the job ID of the selected job data is included to the cloud system 30.

### Steps S19 and S20

In response to receiving the print instruction to print the sample code printed matter in which the job ID of the selected job data is included from the information terminal 13 through the web UI 320, the print management unit 305 of the cloud system 30 transmits, to the control server 11 via the communication unit 311, the print instruction to print the sample code printed matter that includes a job code in which the job ID is encoded and a control code in which information indicating a print sample is encoded.

### Step S21

In response to receiving the print instruction to print the sample code printed matter from the cloud system 30 via the communication unit 111, the print control unit 112 of the control server 11 transmits the print instruction to print the sample code printed matter to the printing machine 20.

### Step S22

In response to receiving the print instruction to print the sample code printed matter from the control server 11, the printing machine 20 executes the printing process based on the document file and outputs a sample code printed matter.

### Steps S23 to S25

When the output of the sample code printed matter is completed, the printing machine 20 transmits a notification indicating the completion of the printing to the control server 11. In response to receiving the notification indicating the completion of the printing from the printing machine 20, the communication unit 111 of the control server 11 transmits the notification indicating the completion of the printing to the cloud system 30. In response to receiving the notification indicating the completion of the printing from the control server 11, the communication unit 311 of the cloud system 30 causes, via the web UI 320, the notification indicating the completion of the printing to be displayed on the web browser 131.

### Step S26

As illustrated in FIG. 7C, the printing operator sets the sample code printed matter printed by the printing machine 20 and the print sample on the reading tray of the image reading apparatus 12 in a state where the sample code printed matter is on top the print sample, and performs a reading operation on the image reading apparatus 12.

### Step S27

The image reading control unit 122 of the image reading apparatus 12 causes the scanner 710 to execute the reading process on the print sample and the sample code printed matter to obtain print sample read image data and sample code read image data.

### Step S28

The transmission unit 123 of the image reading apparatus 12 transmits the print sample read image data and the sample code read image data obtained by the scanner 710 executing the reading process to the cloud system 30 via the communication unit 121. The color sample acquisition unit 302 of the cloud system 30 acquires, via the communication unit 311, the print sample read image data and the sample code read image data obtained by the image reading apparatus 12 executing the reading process.

### Step S29

The analysis unit 307 of the cloud system 30 decodes and analyzes the job code and the control code that are color codes included in the sample code read image data acquired by the color sample acquisition unit 302. The analysis unit 307 obtains the job ID by decoding the job code, and analyzes that the printed matter read together with the sample code printed matter is a print sample by decoding the control code.

### Steps S30 to S32

The DCP creation unit 303 of the cloud system 30 creates a DCP based on the print sample read image data acquired by the color sample acquisition unit 302 and the setting information for creating a DCP registered by the job registration unit 301. The DCP registration unit 304 of the cloud system 30 registers (stores) the DCP created by the DCP creation unit 303 in the storage unit 312 in association with the already registered job data indicated by the job ID analyzed by the analysis unit 307.

### Step S33

The DCP registration unit 304 transmits, to the image reading apparatus 12, a notification indicating that the processes of, for example, receiving the print sample read image data, and creating and registering the DCP are completed.

The web UI 320 changes the status of the target job data from "Sample unregistered" to "Waiting for the first printing" on the job selection screen 1500 displayed on the web browser 131 of the information terminal 13.

Through the processes of steps S11 to S33 described above, the processing to register a job and a color sample is executed by the color adjustment system 1.

### Flow of Color Adjustment Processing Executed by Color Adjustment System

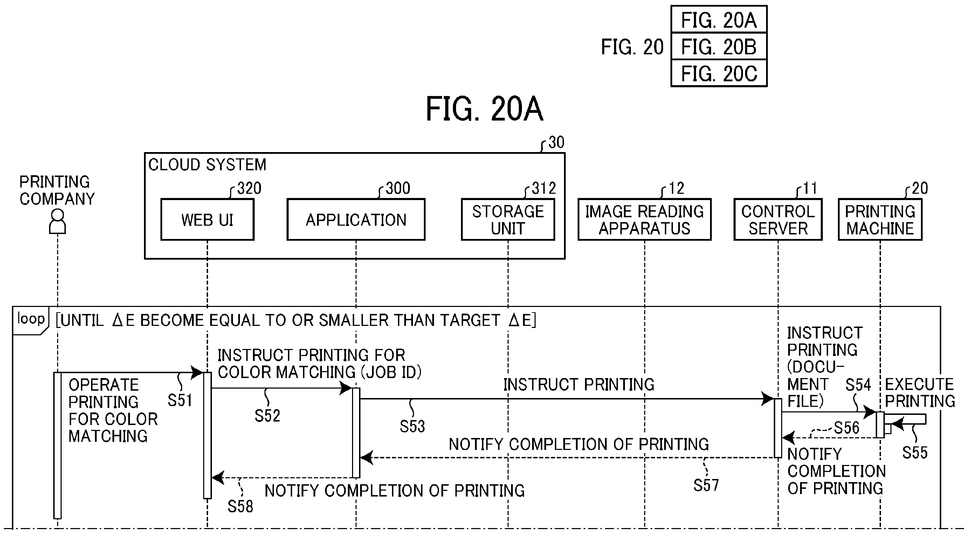

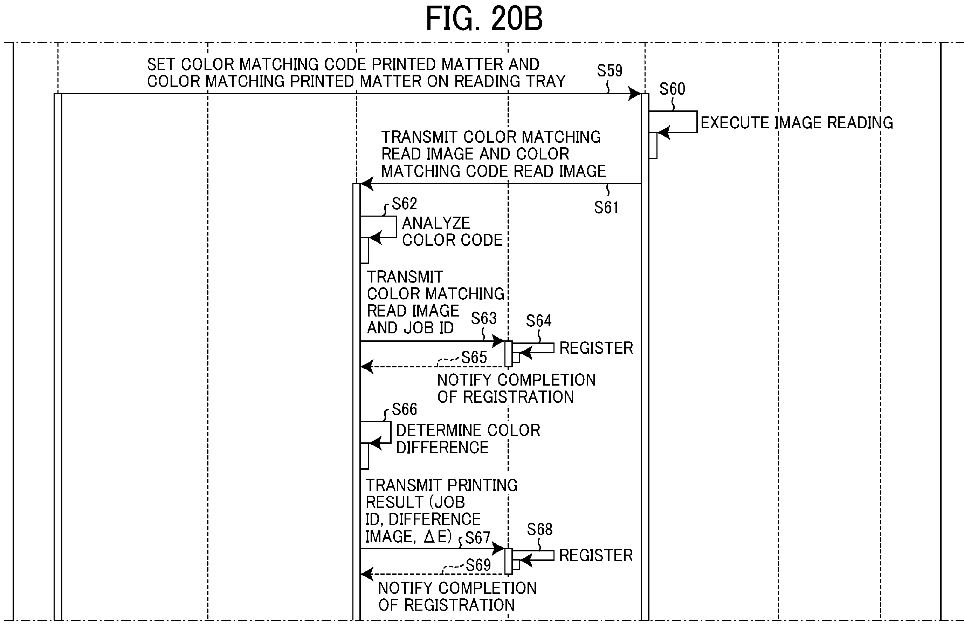

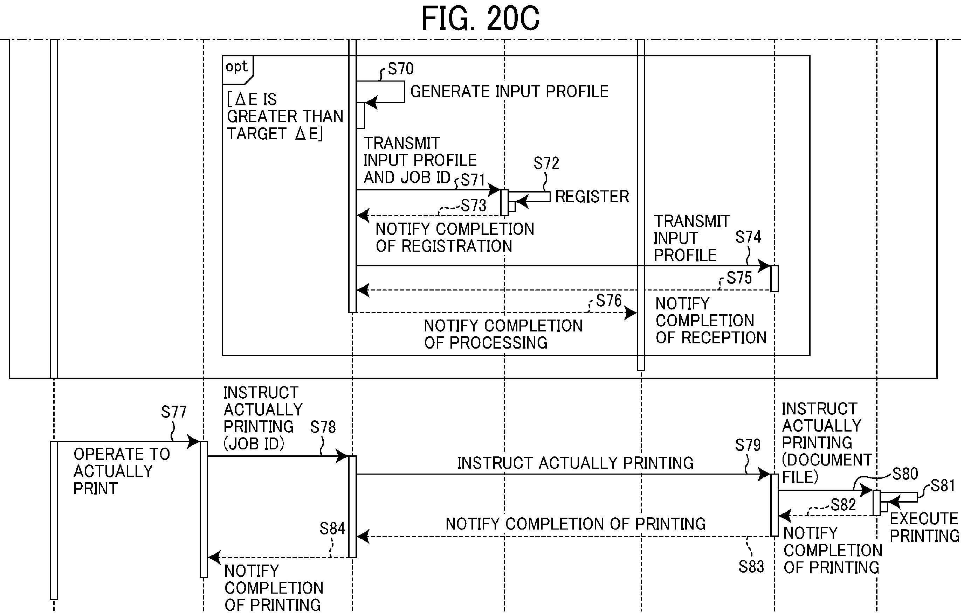

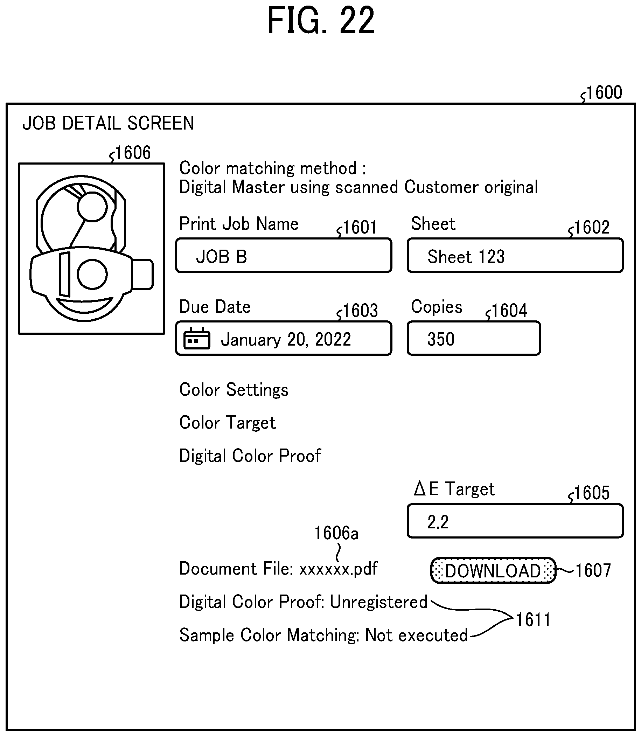

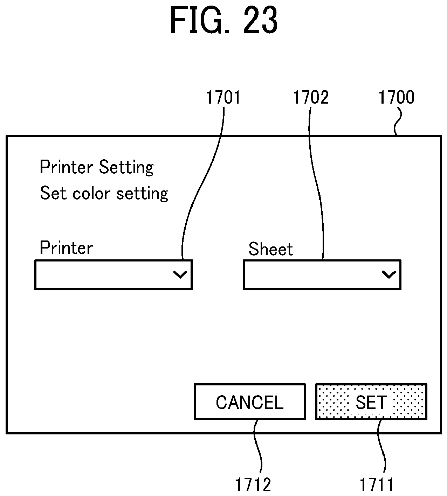

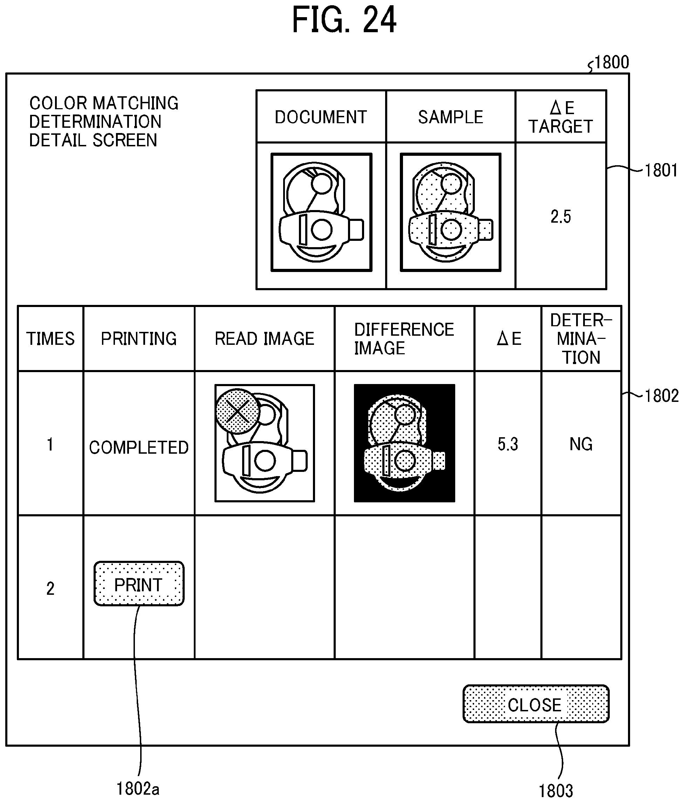

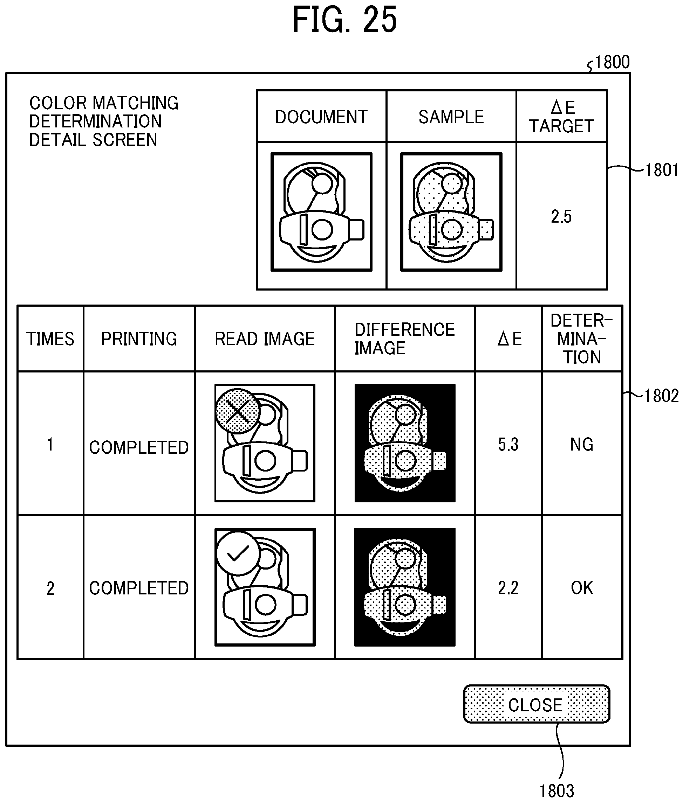

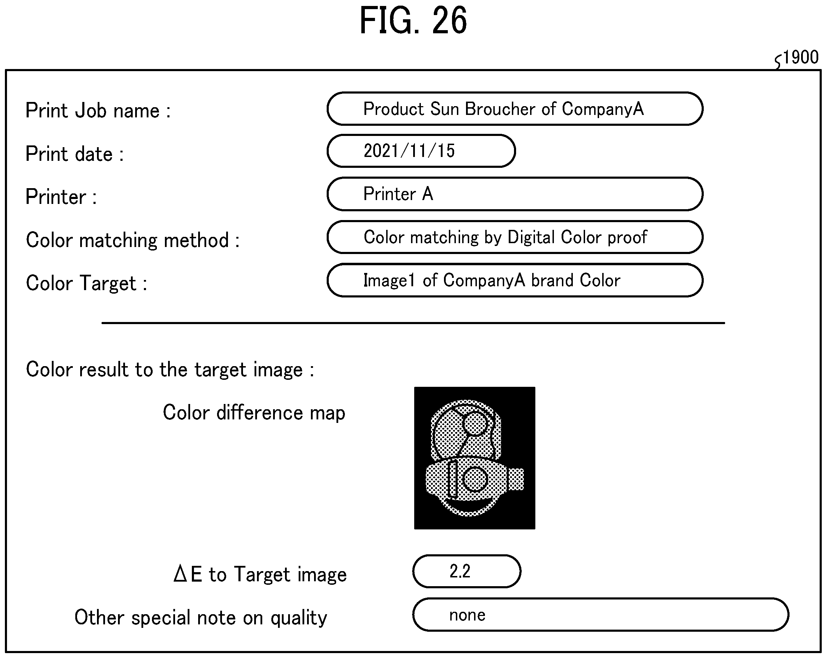

FIG. 20 (FIGS. 20A, 20B, and 20C) is a sequence chart illustrating the color adjustment processing executed by a color adjustment system according to the present embodiment. FIG. 21 is a diagram illustrating a job selection screen according to the present embodiment. FIG. 22 is a diagram illustrating a job detail screen according to the present embodiment. FIG. 23 is a diagram illustrating a printer setting screen according to the present embodiment. FIG. 24 is a diagram illustrating a color matching determination detail screen in a state, according to the present embodiment. FIG. 25 is a diagram illustrating the color matching determination detail screen of FIG. 24 in another state different from the state illustrated in FIG. 24, according to the present embodiment. FIG. 26 is a diagram illustrating a print report according to the present embodiment. With reference to FIGS. 20 to 26, the flow of the color adjustment processing executed by the color adjustment system 1 according to the present embodiment is described.

### Step S51

The printing operator performs, through the web browser 131 of the information terminal 13, an operation for printing a color matching printed matter for job data for which a color matching printed matter waits to be printed. Specifically, the printing operator first causes the job selection screen 1500 illustrated in FIG. 21 to be displayed on the web browser 131.

The job selection screen 1500 is a screen for displaying a list of pieces of job data for which jobs have already been registered and for performing a printing operation for color matching based on each piece of the job data. As illustrated in FIG. 21, the job selection screen 1500 includes a job list display area 1501, a pull-down section 1501a, check boxes 1502, a sample-unregistered check box for collective selection 1503a, a color matching completion check box for collective selection 1503b, a print waiting check box for collective selection 1503c, a print execution pull-down 1504, and a job registration button 1505.

The job list display area 1501 is an area for displaying a list of pieces of job data registered in the cloud system 30. The job name of each piece of job data displayed in the job list display area 1501 has a link. By clicking the link, a job detail screen 1600 for the corresponding piece of job data is displayed. The "status" of each piece of job data displayed in the job list display area 1501 indicates the progress status of the color adjustment processing for each piece of job data. The specific meanings of the "status" indications are, for example, as follows.
- Status: "Sample unregistered" Meaning: DCP unregistered
- Status: "Waiting for the first printing" Meaning: DCP registered and Color matching printed matter not available
- Status: "Waiting for the first scanning" Meaning: DCP registered, Color matching printed matter available, and Color matching read image data not available
- Status: "Waiting for the n-th printing": Meaning: DCP registered, Color matching printed matter available (for n-1 times), Color matching read image data available (for n-1 times), and Print result available (up to the n-1-th time, Average color difference ΔE > Target average color difference ΔE)
- Status: "Waiting for the n-th scanning": Meaning: DCP registered, Color matching printed matter available (for n times), Color matching read image data available (for n-1 times), and Print result available (up to the n-1-th time, Average color difference ΔE > Target average color difference ΔE)
- Status: "Color matching completed": Meaning: DCP registered, Color matching printed matter available (for n times), Color matching read image data available (for n times), and Print result available (up to the n-th time, Average color difference ΔE □ Target average color difference ΔE)
- Status: "Printing completed": Meaning: DCP registered, Color matching printed matter available (for n+1 times), Color matching read image data available (for n times), and Print result available (up to the n-th time, Average color difference ΔE □ Target average color difference ΔE)

The pull-down section 1501a is an operation section for displaying various operations for each piece of registered job data in a pull-down manner. When the pull-down section 1501a is pressed, each operation is displayed in a pull-down manner and can be selected. Examples of the operations are "Job details" (display of the job detail screen 1600), "Printer setting" (display of a printer setting screen 1700), "Color matching determination details" (display of a color matching determination detail screen 1800), "Job name change," "Document file download," "Report output" (output of a print report 1900), "Job deletion," "Sample code print" (output of a sample code printed matter), "Color matching print" (output of a color matching printed matter), and "Print" (actual printing of a document file).

The check boxes 1502 are check boxes used for selecting pieces of job data displayed in the job list display area 1501. The sample-unregistered check box for collective selection 1503a is a check box used for collectively selecting the pieces of job data for which the reading process of the print sample has not been executed, that is, the pieces of job data for which the DCP has not been registered ("Sample unregistered" is indicated in the status). The color matching completion check box for collective selection 1503b is a check box used for collectively selecting the pieces of job data for which the average color difference ΔE of the color matching read image data has been determined to be OK and the color matching has been completed. The print waiting check box for collective selection 1503c is a check box used for collectively selecting the pieces of job data for which the DCP is registered and of which status is "Waiting for the first printing," and the pieces of job data for which the determination (the n-1-th determination) of the average color difference ΔE for the color matching read image data for the previous time is no good and of which status is "Waiting for the n-th printing" for the printing using an input profile newly generated. By checking the sample-unregistered check box for collective selection 1503a, the color matching completion check box for collective selection 1503b, or the print waiting check box for collective selection 1503c, a check is made in a check box 1502 corresponding to each of the pieces of job data collectively selected in conjunction with the check.

In the print execution pull-down 1504, each operation of an operation menu such as "Sample code printing" (output of a sample code printed matter), "Color matching printing" (output of a color matching printed matter), or "Printing" (actual printing of a document file) is displayed in a pull-down manner. When one of the printings displayed in the pull-down manner is selected, the selected printing is executed for the pieces of job data for which the selected printing is executable among the pieces of job data whose check box 1502 is checked.

The job registration button 1505 is a button used for registering job data for which a printing request is received by the print shop as a separate request. The processes performed when the job registration button 1505 is pressed are substantially the same as the processes described with reference to, for example, the job registration screen 1100.

When the link of the job name of one of the pieces of job data displayed in the job list display area 1501 is pressed or when "Job details" is selected for the piece of job data from the operation menu in the pull-down section 1501a, the job detail screen 1600 illustrated in FIG. 22 for displaying the details of the job data is displayed. As illustrated in FIG. 22, the job detail screen 1600 includes a job name display field 1601, a sheet type selection field 1602, a due date display field 1603, a number of copies display field 1604, a target color difference display field 1605, a document file display field 1606, a document file name display field 1606a, a download button 1607, and a status display section 1611.

The job name display field 1601 is a field for displaying the name of a selected piece of job data, and corresponds to the job name input field 1101 on the job registration screen 1100. The sheet type selection field 1602 is a filed for displaying the type of recording medium (type of sheet such as a thin sheet or thick sheet, or a sheet feeding tray storing a specific type of sheet) used when a document file indicated by the selected piece of job data is printed, and corresponds to the sheet type selection field 1109 on the job registration screen 1100. The due date display field 1603 is a field for displaying the due date of the delivery of a printed matter for the selected piece of job data, and corresponds to the due date input field 1108 on the job registration screen 1100. The number of copies display field 1604 is a field for displaying the number of copies to be printed for the document file indicated by the selected piece of job data, and corresponds to the number of copies input field 1103 on the job registration screen 1100. The target color difference display field 1605 is a field for displaying a target average color difference ΔE in comparison with the DCP corresponding to the selected piece of job data, and corresponds to the target color difference input field 1107 on the job registration screen 1100.

The document file display field 1606 is a field for displaying an image of the contents of the document file (the document file uploaded by the brand owner at the time of job registration) included in the selected piece of job data. The document file name display field 1606a is a field for displaying the name of the document file indicated by the selected piece of job data. The download button 1607 is a button used for downloading the document file indicated by the selected piece of job data from the cloud system 30 and storing the document file in the control server 11 of the printing company for printing. As for the image displayed in the document file display field 1606, a thumbnail image of the document file may be generated by the cloud system 30, and acquired and caused to be displayed by the web browser 131 of the information terminal 13 of the printing company as a part of the job detail screen 1600. The status display section 1611 is a section for displaying the determination whether the DCP is already registered and the determination whether the color sample matching is already executed.

When "Printer setting" is selected for one of the pieces of job data displayed in the job list display area 1501 from the operation menu of the pull-down section 1501a, the printer setting screen 1700 illustrated in FIG. 23 for displaying the print setting for the piece of job data is displayed. As illustrated in FIG. 23, the printer setting screen 1700 includes a printer selection field 1701, a sheet type selection field 1702, a setting button 1711, and a cancel button 1712.

The printer selection field 1701 is a field used for selecting a printer (printing machine 20) that executes the printing process according to the piece of job data from a plurality of printers held by the print shop. The sheet type selection field 1702 is a field used for selecting the type of recording medium used for the printing process executed by the printing machine 20. The setting button 1711 is a button used for storing the information on the settings selected in the printer selection field 1701 and the sheet type selection field 1702 in association with the piece of job data registered in the storage unit 312. The cancel button 1712 is a button used for returning to the job selection screen 1500.

When "Color matching determination details" is selected for one of the pieces of job data displayed in the job list display area 1501 from the operation menu of the pull-down section 1501a, the color matching determination detail screen 1800 illustrated in FIG. 24 for displaying the determination result for the piece of job data determined by the print result determination unit 309 is displayed. As illustrated in FIG. 24, the color matching determination detail screen 1800 includes a document and sample display area 1801, a color matching determination result display area 1802, a print button 1802a, and a close button 1803.

The document and sample display area 1801 is an area for displaying an image of the contents of the document file (the document file uploaded by the brand owner at the time of job registration) included in the selected piece of job data, an image of the DCP corresponding to the selected piece of job data, and a target average color difference ΔE. The color matching determination result display area 1802 is an area for displaying, for each time, the determination whether the color matching printed matter is already printed, the color matching read image data, the difference image, the average color difference ΔE, and the determination result of the average color difference ΔE for the color matching read image data. In FIG. 24, a case is illustrated in which, for the job data, the DCP is already registered, the color matching printed matter is available (for one time), the color matching read image data is available (for one time), and the determination result is available (at the first time, the average color difference ΔE > the target average color difference ΔE). Since the color matching printed matter is available for being printed for the second time (the status of "Waiting for the second printing") using the input profile generated by the color matching unit 308, the print button 1802a for executing the printing for the second time is displayed.

In FIG. 25, a state of the color matching determination detail screen 1800 is illustrated when, in the state illustrated in FIG. 24, the reading process is executed for the color matching printed matter for the second time and the print result determination unit 309 determines that the color matching read image data is OK.

### Steps S52 and S53

In response to receiving the print instruction to print the color matching printed matter in which the job ID of the selected piece of job data is included from the information terminal 13 through the web UI 320, the print management unit 305 of the cloud system 30 transmits, to the control server 11 via the communication unit 311, a print instruction to print the color matching code printed matter that includes a job code in which the job ID is encoded and a control code in which information indicating that the printed matter is a color matching printed matter is encoded, and the document file.

### Step S54

In response to receiving the print instruction to print the color matching code printed matter and the document file from the cloud system 30 via the communication unit 111, the print control unit 112 of the control server 11 transmits the print instruction to print the document file and the color matching code printed matter to the printing machine 20. At this time, the print control unit 112 transmits, to the printing machine 20, a print instruction to print the document file using the input profile generated by the color matching unit 308 (in the case of the first printing, an existing input profile).

### Step S55

In response to receiving the print instruction to print the color matching printed matter and the document file from the control server 11, the printing machine 20 executes the printing process for the color matching printed matter and the document file, respectively, and outputs the color matching code printed matter and the color matching printed matter.

### Steps S56 to S58

When the output of the color matching code printed matter and the color matching printed matter is completed, the printing machine 20 transmits a notification indicating the completion of the printing to the control server 11. In response to receiving the notification indicating the completion of the printing from the printing machine 20, the communication unit 111 of the control server 11 transmits the notification indicating the completion of the printing to the cloud system 30. In response to receiving the notification indicating the completion of the printing from the control server 11, the communication unit 311 of the cloud system 30 causes, via the web UI 320, the notification indicating the completion of the printing to be displayed on the web browser 131. At this time, the web UI 320 updates the status of the target job data to "Waiting for the n-th reading" indicating that the printing of the color matching printed matter for the n-th time has been completed on the job selection screen 1500.

### Step S59

As illustrated in FIG. 8C, the printing operator sets the color matching code printed matter and the color matching printed matter printed by the printing machine 20 on the reading tray of the image reading apparatus 12 in a state where the color matching code printed matter is on top the color matching printed matter, and performs a reading operation on the image reading apparatus 12.

### Step S60

The image reading control unit 122 of the image reading apparatus 12 causes the scanner 710 to execute the reading process on the color matching printed matter and the color matching code printed matter to obtain color matching read image data and color matching code read image data.

### Step S61

The transmission unit 123 of the image reading apparatus 12 transmits, to the cloud system 30 via the communication unit 121, the color matching read image data and the color matching code read image data obtained by the scanner 710 executing the reading process. The color matching acquisition unit 306 of the cloud system 30 acquires, via the communication unit 311, the color matching read image data and the color matching code read image data obtained by the image reading apparatus 12 executing the reading process.

### Step S62

The analysis unit 307 of the cloud system 30 decodes and analyzes the job code and the control code that are color codes included in the color matching code read image data acquired by the color matching acquisition unit 306. The analysis unit 307 obtains the job ID by decoding the job code, and analyzes that the printed matter read together with the color matching code printed matter is a color matching printed matter by decoding the control code.

### Steps S63 to S65

The color matching acquisition unit 306 registers (stores) the acquired color matching read image data in the storage unit 312 in association with the already registered job data indicated by the job ID analyzed by the analysis unit 307.

### Step S66

The print result determination unit 309 of the cloud system 30 calculates the average color difference ΔE between the color matching read image data of the color matching printed matter to which the input profile is applied and the DCP, and determines whether the average color difference ΔE is equal to or smaller than the target average color difference ΔE.

### Steps S67 to S69

The print result determination unit 309 registers (stores) the result of the determination (print result) in the storage unit 312 in association with the already registered job data indicated by the job ID analyzed by the analysis unit 307.

### Step S70

When the print result determination unit 309 determines that the average color difference ΔE is greater than the target average color difference ΔE (i.e., when the determination is no good), the color matching unit 308 of the cloud system 30 generates an input profile that facilitates color conversion to bring the color of a printed matter to be printed based on the job data closer to the color indicated by the DCP, based on an existing or already generated input profile, the color matching read image data acquired by the color matching acquisition unit 306, and the DCP corresponding to the color matching read image data. In this case, the color matching unit 308 may update an existing input profile to generate an input profile.

### Steps S71 to S73

The color matching unit 308 registers (stores) the generated input profile in the storage unit 312 in association with the already registered job data indicated by the job ID analyzed by the analysis unit 307.

### Steps S74 and S75

The communication unit 311 of the cloud system 30 transmits the input profile generated by the color matching unit 308 to the control server 11. The communication unit 111 of the control server 11 receives the input profile, stores the input profile in the auxiliary storage device 605, and transmits a notification indicating the completion of the reception to the cloud system 30.

### Step S76

The communication unit 311 of the cloud system 30 transmits, to the image reading apparatus 12, a notification indicating that the processes such as the reception of the color matching read image data and the color matching code read image data, the determination by the print result determination unit 309, and the generation of the input profile by the color matching unit 308 are completed. At this time, the web UI 320 updates the status of the target job data to "Waiting for the n+1-th printing" indicating that the determination for the color matching read image data for the n-th time is no good and the target job data is in the state of waiting for the n+1-th printing on the job selection screen 1500. When the print result determination unit 309 determines that the average color difference ΔE is equal to or smaller than the target average color difference ΔE (i.e., when the determination is OK) in step S66, the web UI 320 updates the status of the target job data to "Color matching completed" indicating that the determination for the color matching read image data for the n-th time is OK and the color matching is completed on the job selection screen 1500.

The above-described processes from step S51 to step S76 are repeated until the print result determination unit 309 determines that the average color difference ΔE is equal to or smaller than the target average color difference ΔE (the determination is OK).

### Step S77

The printing operator performs, through the web browser 131 of the information terminal 13, an operation for executing actual printing for the job data for which the color matching is completed. Specifically, the printing operator first causes the job selection screen 1500 illustrated in FIG. 21 to be displayed on the web browser 131. Then, the printing operator checks the check box 1502 of the job data whose status is "Color matching completed" on the job selection screen 1500, and performs an operation for printing.

### Steps S78 and S79

In response to receiving the print instruction to execute the actual printing including the job ID from the information terminal 13 through the web UI 320, the print management unit 305 of the cloud system 30 transmits, to the control server 11 via the communication unit 311, the print instruction to execute the actual printing of the document file corresponding to the job ID.

### Step S80

In response to receiving the print instruction to execute the actual printing of the document file from the cloud system 30 via the communication unit 111, the print control unit 112 of the control server 11 transmits the print instruction to execute the actual printing of the document file to the printing machine 20. At this time, the print control unit 112 transmits, to the printing machine 20, a print instruction to execute the actual printing of the document file using the input profile generated by the color matching unit 308.

### Step S81

In response to receiving the print instruction to execute the actual printing of the document file from the control server 11, the printing machine 20 executes the printing process based on the document file and outputs a printed matter (an example of the third printed matter) of the document file as a commercial product.

### Steps S82 to S84

When the output of the printed matter of the document file is completed, the printing machine 20 transmits a notification indicating the completion of the printing to the control server 11. In response to receiving the notification indicating the completion of the printing from the printing machine 20, the communication unit 111 of the control server 11 transmits the notification indicating the completion of the printing to the cloud system 30. In response to receiving the notification indicating the completion of the printing from the control server 11, the communication unit 311 of the cloud system 30 causes, via the web UI 320, the notification indicating the completion of the printing to be displayed on the web browser 131. At this time, the web UI 320 updates the status of the target job data to "Printing completed" indicating that the actual printing of the printed matter is completed on the job selection screen 1500.

Through the processes of steps S51 to S84 described above, the color adjustment system 1 executes the color adjustment processing. As described above, since the job code that is a color code is included in the color matching code read image data obtained by the image reading apparatus 12 reading the color matching code printed matter printed out by the printing machine 20, it is possible to determine which job the color matching read image data of the color matching printed matter corresponds to. Accordingly, the printing process for the color matching printed matter and the reading process for the color matching printed matter can be executed independently.

As described above, in the color adjustment system 1 according to the present embodiment, the job registration unit 301 registers job data for requesting printing of a document file in the storage unit 312. The DCP registration unit 304 registers the DCP in the storage unit 312 in association with the job data. The print management unit 305 causes the printing machine 20 to print out the document file indicated by the job data using an input profile corresponding to the job data as the first printed matter including a job code for identifying the job data (a set of the color matching printed matter 3200 and the color matching code printed matter 3300, or the color matching printed matter 3400). The color matching acquisition unit 306 acquires the first read image data (a set of color matching read image data and color matching code read image data, or color matching read image data of the color matching printed matter 3400) obtained by the image reading apparatus 12 reading the first printed matter. The analysis unit 307 analyzes the job code included in the first read image data to specify job data which the first printed matter corresponds to. The color matching unit 308 newly generates an input profile corresponding to the job data based on the DCP, the input profile, and the document file corresponding to the job data indicated by the job code analyzed by the analysis unit 307. As described above, since the job code that is a color code is included in the color matching code read image data obtained by the image reading apparatus 12 reading the color matching code printed matter printed out by the printing machine 20, it is possible to determine which job the color matching read image data of the color matching printed matter corresponds to. Accordingly, the printing process for the color matching and the reading process for the color matching can be executed independently. For example, by using a code image (e.g., a color code) corresponding to job data, each operation after receiving a job order (steps S11 to S 17), such as printing of a sample code printed matter (steps S18 to S25), reading of a print sample for creating color sample data (steps S26 to S33), printing of a color matching printed matter (the first printed matter) (steps S51 to S58), and reading of a color matching printed matter and generation of an input profile (steps S59 to S76) can be performed at different timings or by different workers. Thus, the operation of the business flow becomes flexible. Even when the operation timings or the workers are different, by using the color code, the operation for registering read data in association with job data of a job is facilitated and the possibility of errors is reduced.

### Modification

The color adjustment system according to the modification is described below, focusing on the differences from the color adjustment system 1 according to the above-described embodiment. In the above-described embodiment, the operations have been described based on the assumption of a single print shop. In the present modification, based on the assumption of a plurality of print shops, the operations performed by the printing company that has received a job to transfer, allocate, and duplicate the job to other printing companies are described. In the color adjustment system according to the present modification, the hardware configurations of the printing machine, the control server, the image reading apparatus, the information terminal, and the cloud system, and the functional configurations of the cloud system, the control server, and the image reading apparatus are substantially the same as those described in the above-described embodiment.

### Functional Configuration of Color Adjustment System

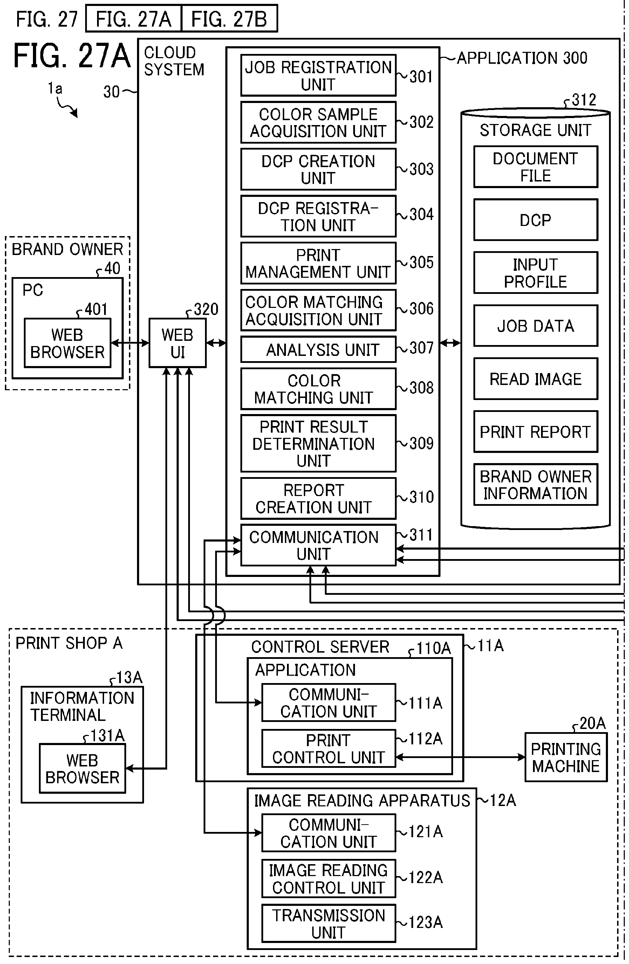

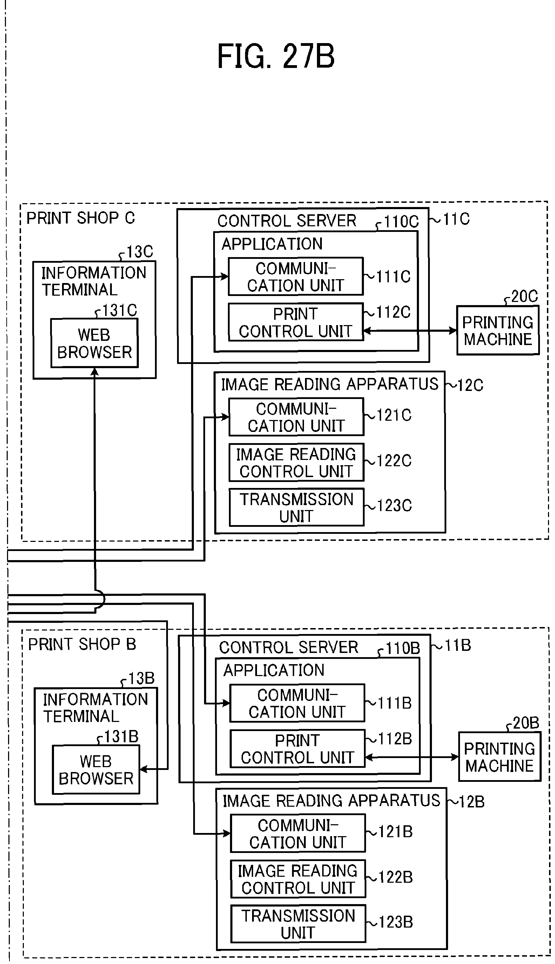

FIG. 27 (FIGS. 27A and 27B) is a block diagram illustrating a functional configuration of the color adjustment system according to the present modification. With reference to FIG. 27, the functional configuration of a color adjustment system 1a according to the present modification is described below.

As illustrated in FIG. 27, the color adjustment system 1a includes control servers 11A to 11C, image reading apparatuses 12A to 12C, information terminals 13A to 13C, printing machines 20A to 20C, the cloud system 30, and the PC 40. In the configuration of the color adjustment system 1a illustrated in FIG. 27, the control servers 11A to 11C, the image reading apparatuses 12A to 12C, the information terminals 13A to 13C, the cloud system 30, and the PC 40 are communicable with each other via the network N such as the Internet. The control servers 11A to 11C and the printing machines 20A to 20C are communicable with each other, respectively, via a network such as a local area network (LAN). As illustrated in FIG. 27, the control server 11A, the image reading apparatus 12A, and the printing machine 20A belong to a shop A. The control server 11B, the image reading apparatus 12B, and the printing machine 20B belong to a print shop B. The control server 11C, the image reading apparatus 12C, and the printing machine 20C belong to a print shop C. The information terminals 13A to 13C are information terminals owned by the printing companies of the print shops A to C, respectively. On the information terminals 13A to 13C, web browsers 131A to 131C (an example of a reception unit by each) are installed, respectively. The functional configurations and operations of the cloud system 30 and the PC 40 are similar to those of the cloud system 30 and the PC 40 of the color adjustment system 1 according to the above-described embodiment, respectively.

In the color adjustment system 1a illustrated in FIG 27, although the three print shops A to C are illustrated as print shops, the number of print shops is not limited to three, and may be two or four or more. In addition, although each print shop holds a single printing machine in FIG 27, the number of printing machines held by each print shop is not limited to one, and may be more than one.

As illustrated in FIG. 27, on the control server 11A, an application 110A is installed as software for implementing each function. The control server 11A includes, as functional units implemented by the CPU 601 executing the application 110A, a communication unit 111A and a print control unit 112A. The operation of each functional unit of the control server 11A is similar to that of each functional unit of the control server 11 of the above-described embodiment.

As illustrated in FIG. 27, on the control server 11B, an application 110B is installed as software for implementing each function. The control server 11B includes, as functional units implemented by the CPU 601 executing the application 110B, a communication unit 111B and a print control unit 112B. The operation of each functional unit of the control server 11B is similar to that of each functional unit of the control server 11 of the above-described embodiment.

As illustrated in FIG. 27, on the control server 11C, an application 110C is installed as software for implementing each function. The control server 11C includes, as functional units implemented by the CPU 601 executing the application 110C, a communication unit 111C and a print control unit 112C. The operation of each functional unit of the control server 11C is similar to that of each functional unit of the control server 11 of the above-described embodiment.

### Color Adjustment Processing Executed by Color Adjustment System

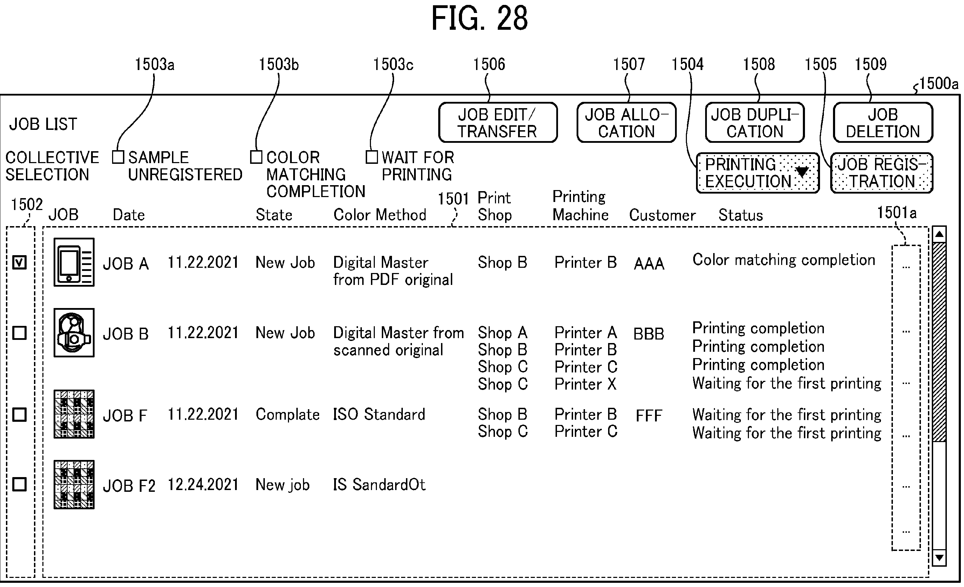

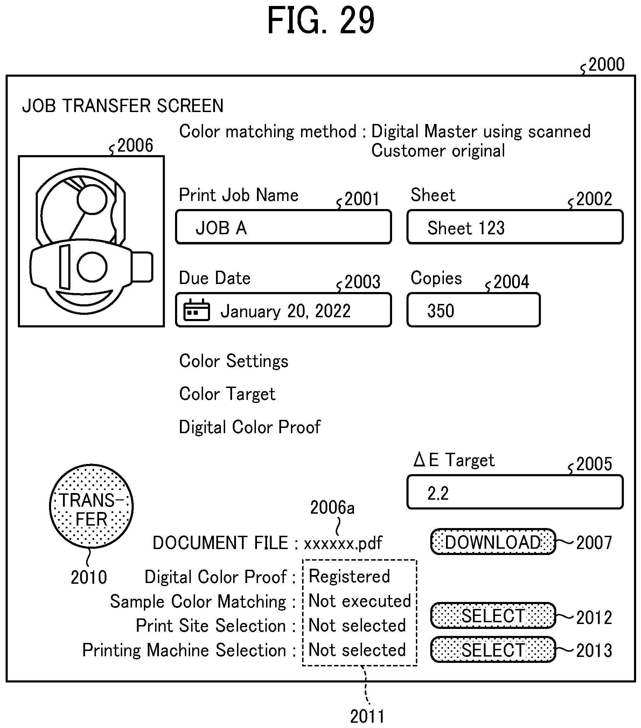

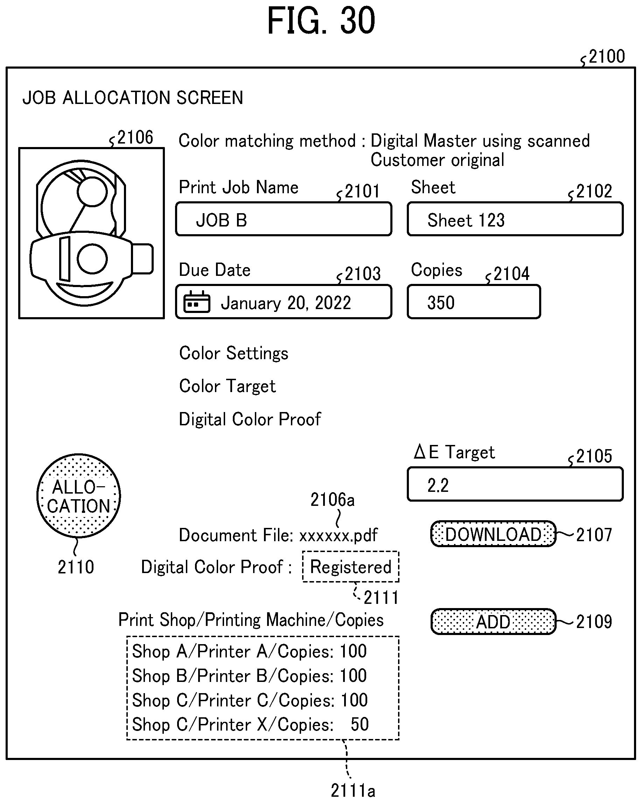

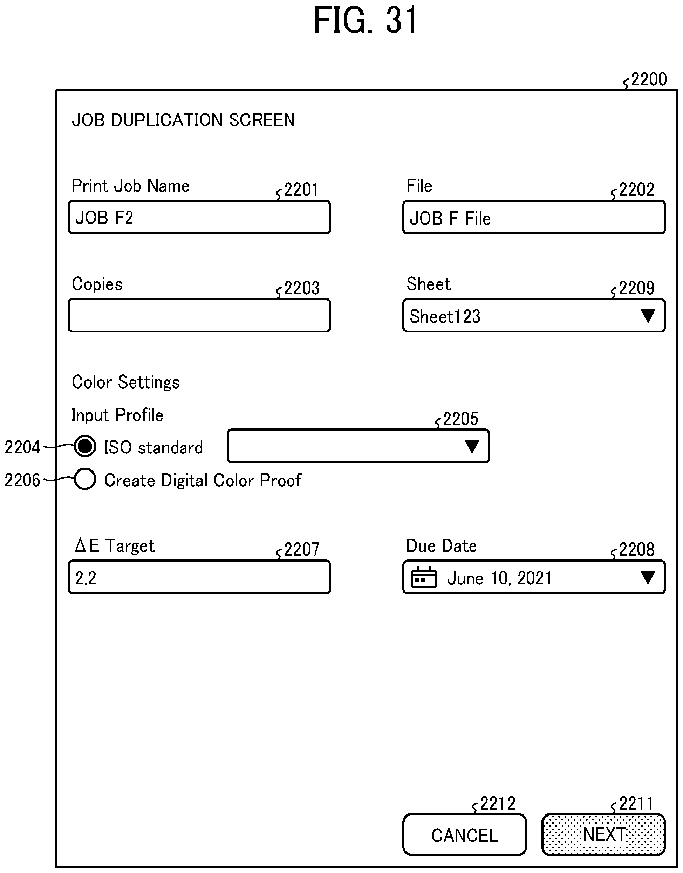

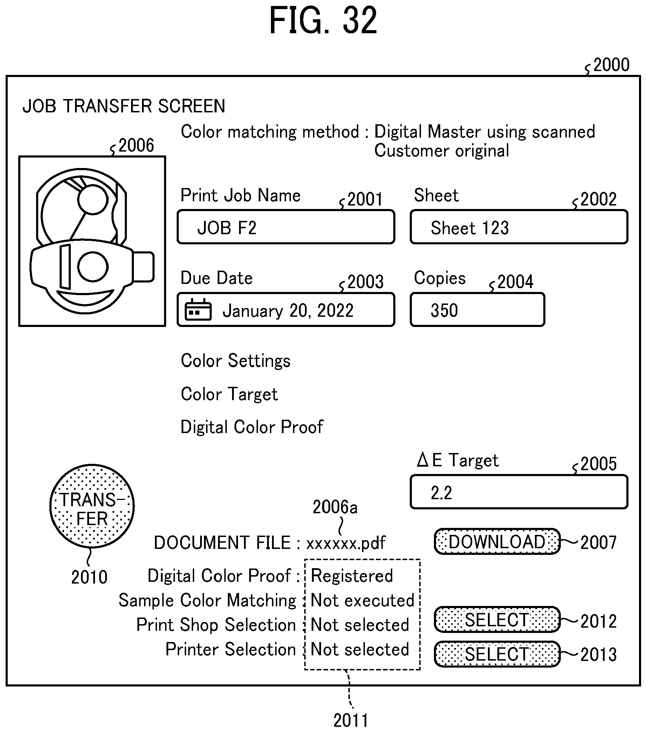

FIG. 28 is a diagram illustrating a job selection screen according to the present modification. FIG. 29 is a diagram illustrating a job transfer screen according to the present modification. FIG. 30 is a diagram illustrating a job allocation screen according to the present modification. FIG. 31 is a diagram illustrating a job duplication screen according to according to the present modification. FIG. 32 is a diagram illustrating a job transfer screen transitioned from a job duplication screen, according to the present modification. With reference to FIGS. 28 to 32 and FIGS. 13 and 20, the color adjustment processing executed by the color adjustment system 1a according to the present modification is described. Particularly, the operations performed by the printing company that has received a job to transfer, allocate, and duplicate the job to other printing companies are described.

In the present modification, it is assumed that the printing company that has received a job is a printing company of the print shop A. In step S51 of FIG. 20, a printing operator of the print shop A that has received the job performs, through the web browser 131A of the information terminal 13A, an operation for selecting the job data for which printing is requested. Specifically, the printing operator causes a job selection screen 1500a illustrated in FIG. 28 to be displayed on the web browser 131A.

As illustrated in FIG. 28, the job selection screen 1500a includes the job list display area 1501, the pull-down section 1501a, the check boxes 1502, the sample-unregistered check box for collective selection 1503a, the color matching completion check box for collective selection 1503b, the print waiting check box for collective selection 1503c, the print execution pull-down 1504, the job registration button 1505, a job edit and transfer button 1506, a job allocation button 1507, a job duplication button 1508, and a job deletion button 1509.

The job list display area 1501 is an area for displaying a list of pieces of job data, among the pieces of job data registered in the cloud system 30, for which a printing request is assigned to the print shop (the print shop A in this case). Further, in addition to the items displayed in the job list display area 1501 on the job selection screen 1500 illustrated in FIG. 21 described above, other items are displayed in the job list display area 1501 on the job selection screen 1500a illustrated in FIG. 28. The other items are, for example, an item indicating the determination whether a job has been transferred or allocated to another print shop ("Print Shop") and an item indicating the determination whether a job has been transferred or allocated to another printing machine ("Printer"). As illustrated in FIG. 28, in the job list display area 1501, not only the pieces of job data assigned to the print shop (the print shop A in this case) but also a list of pieces of job data assigned or allocated to other print shops, or duplicated are displayed.

The pull-down section 1501a, the check boxes 1502, the sample-unregistered check box for collective selection 1503a, the color matching completion check box for collective selection 1503b, the print waiting check box for collective selection 1503c, and the print execution pull-down 1504 are described already in the above-described embodiment. Note that, in this case, these sections and check boxes may be selected or operated for the pieces of job data corresponding to the print shop (the print shop A in this case).

The job registration button 1505 is a button used for registering job data for which a printing request is received by the print shop (the print shop A in this case) as a separate request. The processes performed when the job registration button 1505 is pressed are substantially the same as the processes described with reference to, for example, the job registration screen 1100.

The job edit and transfer button 1506 is a button used for editing a piece of job data selected by checking one of the check boxes 1502 among the pieces of job data already registered, and transferring the selected piece of job data to another print shop or another printing machine. The processes performed when the job edit and transfer button 1506 is pressed will be described in detail with reference to FIG. 29.

The job allocation button 1507 is a button used for allocating a piece of job data selected by checking one of the check boxes 1502 among the pieces of job data already registered to an individual print shop or to an individual printing machine at an individual print shop. The processes performed when the job allocation button 1507 is pressed will be described in detail with reference to FIG. 30.

The job duplication button 1508 is a button used for duplicating a piece of job data selected by checking one of the check boxes 1502 among the pieces of job data already registered, and transferring the duplicated piece of job data to another print shop or another printing machine. The processes performed when the job duplication button 1508 is pressed will be described in detail with reference to FIGS. 31 and 32.

The job deletion button 1509 is a button used for deleting a piece of job data selected by checking one of the check boxes 1502 among the pieces of job data already registered.

### Job Transfer Process

When the printing operator of the print shop A presses the job edit and transfer button 1506 in a state where a desired piece of job data is selected by checking one of the check boxes 1502 among the already registered pieces of job data displayed on the job selection screen 1500a, a job transfer screen 2000 illustrated in FIG. 29 is displayed on the web browser 131A.

The job transfer screen 2000 is a screen for editing a piece of job data selected among the pieces of job data already registered, or for transferring a piece of job data selected among the pieces of job data already registered to another print shop or another printing machine. As illustrated in FIG. 29, the job transfer screen 2000 includes a job name display field 2001, a sheet type selection field 2002, a due date display field 2003, a number of copies display field 2004, a target color difference display field 2005, a document file display field 2006, a document file name display field 2006a, a download button 2007, a transfer button 2010, a status display section 2011, a print shop selection button 2012, and a printing machine selection button 2013.

The job name display field 2001 is a field for displaying the name of a selected piece of job data, and corresponds to the job name input field 1101 on the job registration screen 1100. The sheet type selection field 2002 is a filed for displaying the type of recording medium (type of sheet such as a thin sheet or thick sheet, or a sheet feeding tray storing a specific type of sheet) used when a document file indicated by the selected piece of job data is printed, and corresponds to the sheet type selection field 1109 on the job registration screen 1100. The due date display field 2003 is a field for displaying the due date of the delivery of a printed matter for the selected piece of job data, and corresponds to the due date input field 1108 on the job registration screen 1100. The number of copies display field 2004 is a field for displaying the number of copies to be printed for the document file indicated by the selected piece of job data, and corresponds to the number of copies input field 1103 on the job registration screen 1100. The target color difference display field 2005 is a field for displaying a target average color difference ΔE in comparison with the DCP corresponding to the selected piece of job data, and corresponds to the target color difference input field 1107 on the job registration screen 1100. The content displayed in each of the above-described display fields may be editable for transferring the job data.

The functions of the document file display field 2006, the document file name display field 2006a, and the download button 2007 are similar to those of the document file display field 1606, the document file name display field 1606a, and the download button 1607 on the job detail screen 1600 illustrated in FIG. 22, respectively.

The print shop selection button 2012 is a button used for selecting another print shop to which job data having a job name of "JOB A" displayed on the job transfer screen 2000 is to be transferred. For example, the printing operator of the print shop A that has received the job data can select another print shop as a transfer destination by operating the print shop selection button 2012. In the case of FIG. 28, a state is illustrated, in which the print shop B ("Shop B") that is another print shop is selected as a transfer destination of the job data having the job name of "JOB A." Note that the own print shop (the print shop A in this case) may be selectable by the operation of the print shop selection button 2012.

The printing machine selection button 2013 is a button used for selecting a printing machine to which the job data having the job name of "JOB A" displayed on the job transfer screen 2000 is to be transferred. In this case, the printing machines held by a print shop selected by the print shop selection button 2012 are selectable by the operation of the printing machine selection button 2013. In the case of FIG. 28, a state is illustrated, in which a printing machine ("Printer B") held by the print shop B ("Shop B") is selected as a transfer destination of the job data having the job name of "JOB A." Note that the printing machines held by the own print shop (the print shop A in this case) may be selectable by the operation of the printing machine selection button 2013.

The status display section 2011 is a section for displaying various statuses indicating such as the determination whether the DCP is already registered, the determination whether the color sample matching is already executed, the determination whether a print shop to which the job data is transferred is already selected, and the determination whether a printing machine to which the job data is transferred is already selected. In the case of FIG. 29, the status display section 2011 presents that the DCP is already registered, that the color sample matching is not yet executed, that the print shop to which the job data is transferred is not yet selected, and that the printing machine to which the job data is transferred is not yet selected.

The transfer button 2010 is a button used for setting the printing machine selected by the operation of the printing machine selection button 2013 of the print shop selected by the operation of the print shop selection button 2012 as a transfer destination of the job data. When the transfer button 2010 is pressed, the web browser 131A associates the print shop selected by the operation of the print shop selection button 2012 and the printing machine selected by the operation of the printing machine selection button 2013 with the job data (job data already registered in the storage unit 312) displayed on the job transfer screen 2000, and transmits the associated pieces of information to the web UI 320. The job registration unit 301 of the cloud system 30 acquires the associated pieces of information via the web UI 320, and updates the contents of the registration in the storage unit 312. In this case, the web browser 131A may notify, for example, a PC held by the print shop selected by the operation of the print shop selection button 2012 that the selected print shop has been set as a transfer destination of the job data.

A printing operator of the print shop (for example, a printing operator of the print shop B) set as the transfer destination of the job data can instruct a series of processes to be performed using the DCP associated with the job data in the storage unit 312, such as the color matching, the actual printing, and the report creation in steps S51 to S84.

### Job Allocation Process

When the printing operator of the print shop A presses the job allocation button 1507 in a state where a desired piece of job data is selected by checking one of the check boxes 1502 among the already registered pieces of job data displayed on the job selection screen 1500a, a job allocation screen 2100 illustrated in FIG. 30 is displayed on the web browser 131A.

The job allocation screen 2100 is a screen for allocating a piece of job selected among the pieces of job data already registered to an individual print shop or to an individual printing machine at an individual print shop. As illustrated in FIG. 30, the job allocation screen 2100 includes a job name display field 2101, a sheet type selection field 2102, a due date display field 2103, a number of copies display field 2104, a target color difference display field 2105, a document file display field 2106, a document file name display field 2106a, a download button 2107, an add allocation destination button 2109, an allocation button 2110, a status display section 2111, and an allocation destination display section 2111a.

The job name display field 2101 is a field for displaying the name of a selected piece of job data, and corresponds to the job name input field 1101 on the job registration screen 1100. The sheet type selection field 2102 is a filed for displaying the type of recording medium (type of sheet such as a thin sheet or thick sheet, or a sheet feeding tray storing a specific type of sheet) used when a document file indicated by the selected piece of job data is printed, and corresponds to the sheet type selection field 1109 on the job registration screen 1100. The due date display field 2103 is a field for displaying the due date of the delivery of a printed matter for the selected piece of job data, and corresponds to the due date input field 1108 on the job registration screen 1100. The number of copies display field 2104 is a field for displaying the number of copies to be printed for the document file indicated by the selected piece of job data, and corresponds to the number of copies input field 1103 on the job registration screen 1100. The target color difference display field 2105 is a field for displaying a target average color difference ΔE in comparison with the DCP corresponding to the selected piece of job data, and corresponds to the target color difference input field 1107 on the job registration screen 1100. The content displayed in each of the above-described display fields may be editable for transferring the job data.

The functions of the document file display field 2106, the document file name display field 2106a, and the download button 2107 are similar to those of the document file display field 1606, the document file name display field 1606a, and the download button 1607 on the job detail screen 1600 illustrated in FIG. 22, respectively.

The add allocation destination button 2109 is a button used for selecting a print shop and a printing machine to which job data having a job name of "JOB B" displayed on the job allocation screen 2100 is to be allocated, and for inputting the number of copies to be printed by the selected printing machine. For example, the printing operator of the print shop A that has received the job data can select print shops and printing machines as allocation destinations, and input the number of copies to be printed by each printing machine at each print shop by operating the add allocation destination button 2109. In FIGS. 28 and 30, a case is described in which, for the job data having the job name of "JOB B," 100 copies are allocated to a printing machine ("Printer A") of a print shop represented by the print shop A ("Print Shop A"), 100 copies are allocated to a printing machine ("Printer B") of a print shop represented by the print shop B ("Print Shop B"), 100 copies are allocated to a printing machine ("Printer C") of a print shop represented by a print shop C ("Print Shop C"), and 50 copies are allocated to a printing machine ("Printer X") of the print shop C.

The status display section 2111 is a section for displaying a status indicating the determination whether the DCP is already registered. In the case of FIG. 30, the status display section 2111 presents that the DCP is already registered.

The allocation destination display section 2111a is a section for displaying the print shops and the printing machines selected by the operation of the add allocation destination button 2109 as allocation destinations, and for displaying the number of copies to be printed by each printing machine.

The allocation button 2110 is a button used for setting the print shops and the printing machines selected by the operation of the add allocation destination button 2109 as allocation destinations, and for setting the number of copies to be printed by each printing machine. When the allocation button 2110 is pressed, the web browser 131A associates the print shops and the printing machines selected by the operation of the add allocation destination button 2109 as the allocation destinations and the number of copies to be printed by each printing machine with the job data (job data already registered in the storage unit 312) displayed on the job allocation screen 2100, and transmits the associated pieces of information to the web UI 320. The job registration unit 301 of the cloud system 30 acquires the associated pieces of information via the web UI 320, and updates the contents of the registration in the storage unit 312. In this case, the web browser 131A may notify, for example, PCs held by the print shops selected by the operation of the add allocation destination button 2109 as the allocation destinations that the selected print shops have been set as the allocations destinations of the job data.

A printing operator of each of the print shops set as the allocation destinations of the job data can instruct a series of processes to be performed using the DCP associated with the job data in the storage unit 312, such as the color matching, the actual printing, and the report creation in steps S51 to S84. As a result, the job is shared among the print shops and the printing machines set as the allocation destinations and executed. In the job list display area 1501 on the job selection screen 1500a, the number of copies set to be printed and the number of copies already printed, or the ratio of the number of copies already printed to the number of copies set to be printed may be displayed for each printing machine at each of the print shops set as the allocation destinations.

### Job Duplication Process

When the printing operator of the print shop A presses the job duplication button 1508 in a state where a desired piece of job data is selected by checking one of the check boxes 1502 among the already registered pieces of job data displayed on the job selection screen 1500a, a job duplication screen 2200 illustrated in FIG. 31 is displayed on the web browser 131A.

The job duplication screen 2200 is a screen for duplicating a piece of job data selected among the pieces of job data already registered. As illustrated in FIG. 31, the job duplication screen 2200 includes a job name input field 2201, a document file designation field 2202, a number of copies input field 2203, a standard selection section 2204, a standard profile designation field 2205, a DCP creation selection section 2206, a target color difference input field 2207, a due date input field 2208, a sheet type selection field 2209, a next button 2211, and a cancel button 2212.

The job name input field 2201 is an input field for setting a name of job data to be duplicated. The document file designation field 2202 is a field used for selectively designating a document file, such as a PDF file, subjected to duplicating. The number of copies input field 2203 is an input field used for setting the number of copies to be printed for the document file indicated by the job data to be duplicated. The standard selection section 2204 is a radio button used for selecting the use of an input profile (standard input profile) of the standard of ISO without creating a DCP. The standard profile designation field 2205 is a field used for selectively designating a standard input profile when the standard selection section 2204 is selected. The DCP creation selection section 2206 is a radio button used for selecting creation of a DCP. The target color difference input field 2207 is an input field used for setting a target average color difference ΔE in comparison with the DCP. The due date input field 2208 is an input field used for setting a due date of the delivery of a printed matter for the job data to be duplicated. The sheet type selection field 2209 is a field used for selecting the type of sheet on which texts or images are printed based on the document file. The next button 2211 is a button used for transitioning to the job transfer screen 2000 illustrated in FIG. 29. The cancel button 2212 is a button used for canceling the settings input on the job duplication screen 2200 and returning to the job selection screen 1500a.

The settings of the job data selected on the job selection screen 1500a may be automatically set and displayed in each field and each selection section on the job duplication screen 2200. Note that the number of copies input field 2203 and the due date input field 2208 on the job duplicate screen 2200 may be displayed in a state where the settings are not automatically set but no settings are set, and settings are newly set for the duplicate job data.

When the next button 2211 is pressed, the job transfer screen 2000 illustrated in FIG. 32 is displayed on the web browser 131A.

The job transfer screen 2000 illustrated in FIG. 32 is a screen for transferring job data subjected to duplicating to another print shop or another printing machine. The configuration of the job transfer screen 2000 illustrated in FIG. 32 is similar to that of the job transfer screen 2000 illustrated in FIG. 29. In the job name display field 2001, the sheet type selection field 2002, the due date display field 2003, the number of copies display field 2004, and the target color difference display field 2005, the values set in the job name input field 2201, the sheet type selection field 2209, the due date input field 2208, the number of copies input field 2203, and the target color difference input field 2207 on the job duplication screen 2200 illustrated in FIG. 31 are displayed, respectively. The document file name display field 2006a is assigned the name of the document file indicated by the job data selected on the job selection screen 1500a. The DCP displayed in the status display section 2011 is assigned the DCP associated with the job data selected on the job selection screen 1500a. As the print shop displayed in the status display section 2011, the print shop where the job selection screen 1500a is opened may be automatically set, or the print shop originally set for the job data selected on the job selection screen 1500a may be automatically set. In FIG. 32, a case where job data having a job name of "JOB F" is duplicated as a job name of "JOB F2" is illustrated.

When the transfer button 2010 is pressed, the web browser 131A duplicates the job data originally selected on the job selection screen 1500a according to the contents of the settings set on the job transfer screen 2000 illustrated in FIG. 32 to newly create job data as duplicated job data. Further, the web browser 131A associates the DCP displayed in the status display section 2011, the print shop selected by the operation of the print shop selection button 2012, and the printing machine selected by the operation of the printing machine selection button 2013 with the duplicated job data, and transmits the associated pieces of information to the web UI 320. The job registration unit 301 of the cloud system 30 acquires the associated pieces of information via the web UI 320, and updates the contents of the registration in the storage unit 312. In this case, the web browser 131A may notify, for example, a PC held by the print shop selected by the operation of the print shop selection button 2012 that the selected print shop has been set as a transfer destination of the job data.

The settings for duplicating the job data on the job duplication screen 2200 illustrated in FIG. 31 and the settings for transferring the job data on the job transfer screen 2000 illustrated in FIG. 32 can be set for the purpose of executing additional printing or reprinting even after the printing process according to the job data (job data having the job name of "JOB F") originally selected is completed.

A printing operator of the print shop set as the transfer destination of the duplicated job can instruct a series of processes to be performed using the DCP associated with the job data in the storage unit 312, such as the color matching, the actual printing, and the report creation in steps S51 to S84.

As described above, in the color adjustment system 1a according to the present modification, the web UI 320 of the cloud system 30 causes the job selection screen 1500a for selecting a piece of job data from a list of pieces of job data and screens such as the job transfer screen 2000 and the job allocation screen 2100 for selecting print shops and a printing machine at each of the print shops as destinations requested to print a document file indicated by the piece of job data selected on the job selection screen 1500a to be displayed. Thus, registered job data can be transferred or allocated to a printing machine at another print shop. For example, when the capacity of printing at a print shop scheduled to execute printing for job data is reduced or disabled for some reason, the job data can be transferred or allocated to another print shop. As a result, flexibility in printing is provided.

When at least one of the functional units of the control servers 11, 11A to 11C, the image reading apparatuses 12, 12A to 12C, and the cloud system 30 according to the above-described embodiment and modification is implemented by execution of a program, the program can be stored in advance in, for example, a ROM and provided. The programs executed by the control servers 11, 11A to 11C, the image reading apparatuses 12, 12A to 12C, and the cloud system 30 according to the above-described embodiment and modification may be recorded in a computer-readable recording medium such as a compact disc read-only memory (CD-ROM), a flexible disk (FD), a compact disc-recordable (CD-R), or a digital versatile disc (DVD) in an installable format or an executable format, and provided. Alternatively, the programs executed by the control servers 11, 11A to 11C, the image reading apparatuses 12, 12A to 12C, and the cloud system 30 according to the above-described embodiment and modification may be stored on a computer connected to a network such as the Internet so that the programs can be downloaded through the network and provided. Still alternatively, the programs executed by the control servers 11, 11A to 11C, the image reading apparatuses 12, 12A to 12C, and the cloud system 30 according to the above-described embodiment and modification may be provided or distributed via a network such as the Internet. The programs executed by the control servers 11, 11A to 11C, the image reading apparatuses 12, 12A to 12C, and the cloud system 30 according to the above-described embodiment and modification have module configurations including at least one of the above-described functional units. As actual hardware, processors such as the CPU 601 and the CPU 701 read the programs from the above-described storage devices (for example, the auxiliary storage device 605 and the storage device 702) and executes the programs to load the above-described functional units onto a main storage device and implement the above-described functional units.

Aspects of the present disclosure are, for example, as follows.

According to Aspect 1, a color adjustment system includes:
a first registration unit that registers job data for instructing printing of an image based on a document file in a storage unit;
a second registration unit that registers color sample data in the storage unit in association with the job data;
a print management unit that causes a printing apparatus to print out, using an input profile corresponding to the job data, the document file indicated by the job data as a first printed matter including an identification code for identifying the job data;
a first acquisition unit that acquires first read image data obtained by a reading apparatus reading the first printed matter;
an analysis unit that analyzes the identification code included in the first read image data to specify job data to which the first printed matter corresponds to; and
a generation unit that newly generates an input profile corresponding to the job data based on the color sample data, the input profile, and the document file corresponding to the job data indicated by the identification code analyzed by the analysis unit.

According to Aspect 2, in the color adjustment system according to Aspect 1, the print management unit causes a second printed matter including the identification code for identifying the job data registered by the first registration unit to be printed out. The color adjustment system further includes a second acquisition unit that acquires second read image data obtained by the reading apparatus reading the second printed matter and print sample read image data obtained by the reading apparatus reading a print sample together with the second printed matter. The analysis unit analyzes the identification code included in the second read image data to specify job data to which the second printed matter corresponds to. The color adjustment system further includes a first creation unit that creates the color sample data based on the print sample read image data. The second registration unit registers the color sample data created by the first creation unit in the storage unit in association with the job data indicated by the identification code analyzed by the analysis unit.

According to Aspect 3, the color adjustment system according to Aspect 1 further includes a first creation unit that creates the color sample data based on the document file indicated by the job data and a color conversion rule.

According to Aspect 4, the color adjustment system according to Aspect 2 or 3 further includes a reception unit that receives selection of a creation method of the color sample data in association with the job data registered by the first registration unit, and the first creation unit creates the color sample data based on the creation method received by the reception unit.

According to Aspect 5, in the color adjustment system according to Aspect 4, in response to receiving the selection of a creation method that includes reading the print sample as the creation method, the reception unit receives designation of a reference page of the print sample to be read.

According to Aspect 6, the color adjustment system according to any one of Aspects 1 to 5 further includes a determination unit that determines a color difference between the first read image data and the color sample data.

According to Aspect 7, in the color adjustment system according to Aspect 6, in the case where the determination unit determines that the color difference is abnormal, the generation unit newly generates an input profile corresponding to the job data, based on the color sample data, the input profile, and the document file corresponding to the job data indicated by the identification code analyzed by the analysis unit.

According to Aspect 8, in the color adjustment system according to Aspect 6, in the case where the determination unit determines that the color difference is normal, the print management unit causes the printing apparatus to print out, using the input profile used for printing out the first printed matter, a third printed matter as a commercial product based on the document file indicated by the job data.

According to Aspect 9, the color adjustment system according to any one of Aspects 6 to 8 further includes a second creation unit that creates a print report including a determination result determined by the determination unit.

According to Aspect 10, in the color adjustment system according to any one of Aspects 1 to 9, the identification code is a color code formed of a combination of patches of a plurality of colors.

According to Aspect 11, in the color adjustment system according to any one of Aspects 1 to 10, the first printed matter includes, in addition to the identification code, a control code indicating that the first printed matter is a printed matter printed out based on the document file, and the analysis unit analyzes, based on the control code, whether the first printed matter is a printed matter printed out based on the document file.

According to Aspect 12, in the color adjustment system according to Aspect 2, the second printed matter includes, in addition to the identification code, a control code indicating that an object read together with the second printed matter by the reading apparatus is the print sample, and the analysis unit analyzes, based on the control code, whether the object read together with the second printed matter by the reading apparatus is the print sample.

According to Aspect 13, the color adjustment system according to any one of Aspects 1 to 12 further includes a display control unit that displays, on a display, for the job data, registration of the color sample data, a status of printing of the first printed matter, a status of reading of the first printed matter, and a progress status indicating the status of the reading of the first printed matter.

According to Aspect 14, the color adjustment system according to any one of Aspects 6 to 9 further includes a display control unit that displays, on a display, details of the determination result determined by the determination unit for the job data.

According to Aspect 15, the color adjustment system according to Aspect 2 further includes a reception unit that receives selection of a plurality of pieces of job data from a list of pieces of job data including the job data displayed on a job list screen, and the print management unit causes, for each of the pieces of job data selected by the reception unit, the first printed matter, the second printed matter, or a third printed matter as a commercial product to be printed out.

According to Aspect 16, the color adjustment system according to Aspect 2 further includes a reception unit that receives, from a list of pieces of job data including the job data displayed on a job list screen, collective selection of a plurality of pieces of job data for which the color sample data is not registered by the second registration unit, and the print management unit causes, for each of the pieces of job data collectively selected by the reception unit, the second printed matter to be printed out.

According to Aspect 17, in the color adjustment system according to any one of Aspects 1 to 16, the reception unit receives, from the list of pieces of job data including the job data displayed on the job list screen, collective selection of a plurality of pieces of job data for which the first printed matter waits to be printed out, and the print management unit causes, for each of the pieces of job data collectively selected by the reception unit, the first printed matter to be printed out.

According to Aspect 18, in the color adjustment system according to Aspect 8, the reception unit receives, from a list of pieces of job data including the job data displayed on a job list screen, collective selection of a plurality of pieces of job data for which the color difference is determined to be normal by the determination unit, and the print management unit causes, for each of the pieces of job data collectively selected by the reception unit, the third printed matter to be printed out.

According to Aspect 19, a color adjustment method includes:
registering job data for instructing printing of an image based on a document file in a storage unit;
registering color sample data in the storage unit in association with the job data;
causing a printing apparatus to print out, using an input profile corresponding to the job data, the document file indicated by the job data as a first printed matter including an identification code for identifying the job data;
acquiring first read image data obtained by a reading apparatus reading the first printed matter;
analyzing which job data the first printed matter corresponds to, based on the identification code included in the first read image data; and
newly generating an input profile corresponding to the job data based on the color sample data, the input profile, and the document file corresponding to the job data indicated by the analyzed identification code.

According to Aspect 20, a printed matter includes an identification code for identifying job data for instructing printing of an image based on a document file and a control code for identifying a type of a printed matter subjected to reading by a reading apparatus.

According to Aspect 21, a carrier medium carries computer readable code for controlling a computer system to carry out a method. The method includes:
registering job data for instructing printing of an image based on a document file in a storage unit;
registering color sample data in the storage unit in association with the job data;
causing a printing apparatus to print out, using an input profile corresponding to the job data, the document file indicated by the job data as a first printed matter including an identification code for identifying the job data;
acquiring first read image data obtained by a reading apparatus reading the first printed matter;
analyzing which job data the first printed matter corresponds to, based on the identification code included in the first read image data; and
newly generating an input profile corresponding to the job data based on the color sample data, the input profile, and the document file corresponding to the job data indicated by the analyzed identification code.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

In another aspect, in a color adjustment system, in response to receiving selection of a creation method that includes reading a print sample as the creation method, a reception unit receives designation of a reference page of the print sample to be read.

In another aspect, a color adjustment system includes a second creation unit to create a print report including a determination result determined by a determination unit.

In another aspect, a color adjustment system includes a display control unit to display, on a display, details of a determination result determined by a determination unit for job data.

In another aspect, a color adjustment system includes a reception unit to receive selection of a plurality of pieces of job data from a list of pieces of job data including job data displayed on a job list screen. In the color adjustment system, a print management unit causes, for each of the plurality of pieces of job data selected by a reception unit, a first printed matter, a second printed matter, or a third printed matter as a commercial product to be printed out.

In another aspect, a color adjustment system includes a reception unit to receive, from a list of pieces of job data including job data displayed on a job list screen, collective selection of a plurality of pieces of job data for which color sample data is not registered by a second registration unit. In the color adjustment system, a print management unit causes, for each of the plurality of pieces of job data collectively selected by the reception unit, a second printed matter to be printed out.

In another aspect, a color adjustment system includes a reception unit to receive, from a list of pieces of job data including job data displayed on a job list screen, collective selection of a plurality of pieces of job data for which a first printed matter waits to be printed out. In the color adjustment system, a print management unit causes, for each of the plurality of pieces of job data collectively selected by the reception unit, a first printed matter to be printed out.

## Claims

1. A color adjustment system (1, 1a) comprising:
a first registration unit (301) configured to register in a storage unit job data for instructing printing of an image based on a document file;
a second registration unit (304) configured to register color sample data in the storage unit in association with the job data;
a print management unit (305) configured to cause a printing apparatus to print, using an input profile corresponding to the job data, the image based on the document file indicated by the job data to output a first printed matter including an identification code for identifying the job data;
a first acquisition unit (306) configured to acquire first read image data obtained by a reading apparatus reading the first printed matter;
an analysis unit (307) configured to analyze the identification code included in the first read image data to specify a particular job data the first printed matter corresponds to; and
a generation unit (308) configured to newly generate another input profile corresponding to the particular job data based on the color sample data, the input profile, and the document file corresponding to the particular job data indicated by the identification code analyzed by the analysis unit (307).

2. The color adjustment system (1, 1a) according to claim 1,
wherein the print management unit (305) is configured to cause the printing apparatus to print out a second printed matter including the identification code,
the color adjustment system (1, 1a) further comprising:
a second acquisition unit (302) configured to acquire second read image data obtained by the reading apparatus reading the second printed matter and print sample read image data obtained by the reading apparatus reading a print sample together with the second printed matter; and
a first creation unit (303) configured to create the color sample data based on the print sample read image data,
wherein the analysis unit (307) is configured to analyze the identification code included in the second read image data to specify the particular job data the second printed matter corresponds to, and
the second registration unit (304) is configured to register the color sample data created by the first creation unit (303) in the storage unit in association with the particular job data indicated by the identification code analyzed by the analysis unit (307).

3. The color adjustment system (1, 1a) according to claim 1, further comprising a first creation unit (303) configured to create the color sample data based on the document file indicated by the job data and a color conversion rule.

4. The color adjustment system (1, 1a) according to claim 2 or 3, further comprising a reception unit (131, 401) configured to receive selection of a creation method of the color sample data in association with the job data registered by the first registration unit (301),
wherein the first creation unit (303) is configured to create the color sample data based on the creation method received by the reception unit (131, 401).

5. The color adjustment system (1, 1a) according to any one of claims 1 to 3, further comprising a determination unit (309) to determine a color difference between the first read image data and the color sample data.

6. The color adjustment system (1, 1a) according to claim 5, wherein, in a case that the determination unit (309) determines that the color difference is abnormal, the generation unit (308) is configured to newly generate the other input profile corresponding to the particular job data, based on the color sample data, the input profile, and the document file corresponding to the particular job data indicated by the identification code analyzed by the analysis unit (307).

7. The color adjustment system (1, 1a) according to claim 5, wherein, in a case that the determination unit (309) determines that the color difference is normal, the print management unit (305) is configured to cause the printing apparatus to print out, using the input profile used for printing out the first printed matter, a third printed matter as a commercial product based on the document file indicated by the job data.

8. The color adjustment system (1, 1a) according to any one of claims 1 to 7, wherein the identification code is a color code formed of a combination of patches of a plurality of colors.

9. The color adjustment system (1, 1a) according to any one of claims 1 to 8, wherein:
the first printed matter includes, in addition to the identification code, a control code indicating that the first printed matter is a printed matter printed out based on the document file; and
the analysis unit (307) is configured to analyze, based on the control code, whether the first printed matter is the printed matter printed out based on the document file.

10. The color adjustment system (1, 1a) according to claim 2, wherein:
the second printed matter includes, in addition to the identification code, a control code indicating that an object read together with the second printed matter by the reading apparatus is the print sample; and
the analysis unit (307) is configured to analyze, based on the control code, whether the object read together with the second printed matter by the reading apparatus is the print sample.

11. The color adjustment system (1, 1a) according to any one of claims 1 to 10, further comprising a display control unit (320) configured to display, on a display, for the job data, registration of the color sample data, a status of printing of the first printed matter, a status of reading of the first printed matter, and a progress status indicating the status of the reading of the first printed matter.

12. The color adjustment system (1, 1a) according to claim 7, further comprising a reception unit (131, 401) configured to receive, from a list of pieces of job data including the job data displayed on a job list screen, collective selection of a plurality of pieces of job data for which the color difference is determined to be normal by the determination unit (309),
wherein the print management unit (305) is configured to cause, for each of the plurality of pieces of job data collectively selected by the reception unit (131, 401), the third printed matter to be printed out.

13. A color adjustment method comprising:
registering (S1 1) in a storage unit job data for instructing printing of an image based on a document file;
registering (S31) color sample data in the storage unit in association with the job data;
causing (S55) a printing apparatus to print, using an input profile corresponding to the job data, the image based on the document file indicated by the job data to output a first printed matter including an identification code for identifying the job data;
acquiring (S60) first read image data obtained by a reading apparatus reading the first printed matter;
analyzing (S62) the identification code included in the first read image data to specify a particular job data the first printed matter corresponds to; and
newly generating (S70) another input profile corresponding to the particular job data based on the color sample data, the input profile, and the document file corresponding to the particular job data indicated by the identification code analyzed by the analysis unit (307).

14. A printed matter comprising:
an identification code for identifying job data for instructing printing of an image based on a document file; and
a control code for identifying a type of a printed matter subjected to reading by a reading apparatus.

15. A carrier medium carrying computer readable code for controlling a computer system to carry out a method, the method comprising:
registering (S11) in a storage unit job data for instructing printing of an image based on a document file;
registering (S31) color sample data in the storage unit in association with the job data;
causing (S55) a printing apparatus to print, using an input profile corresponding to the job data, the image based on the document file indicated by the job data to output a first printed matter including an identification code for identifying the job data;
acquiring (S60) first read image data obtained by a reading apparatus reading the first printed matter;
analyzing (S62) the identification code included in the first read image data to specify a particular job data the first printed matter corresponds to; and
newly generating (S70) another input profile corresponding to the particular job data based on the color sample data, the input profile, and the document file corresponding to the particular job data indicated by the identification code analyzed by the analysis unit (307).
